(19) Europäisches Patentamt
European Patent Office
Office européen des brevets

(11) **EP 1 534 954 B1**

(12) **EUROPEAN PATENT SPECIFICATION**

(45) Date of publication and mention
of the grant of the patent:
**30.07.2008 Bulletin 2008/31**

(21) Application number: **03787745.3**

(22) Date of filing: **14.08.2003**

(51) Int Cl.:
**F04B 19/24** (2006.01)     **F04B 19/00** (2006.01)

(86) International application number:
**PCT/DK2003/000544**

(87) International publication number:
**WO 2004/016948 (26.02.2004 Gazette 2004/09)**

(54) **MICRO LIQUID HANDLING DEVICE AND METHODS FOR USING IT**

MIKROVORRICHTUNG ZUM HANDHABEN VON FLÜSSIGKEITEN UND VERFAHREN ZUR DEREN VERWENDUNG

DISPOSITIF DE MANUTENTION DE LIQUIDES DANS DES MICROCANAUX ET LEURS PROCEDES D'UTILISATION

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **15.08.2002 DK 200201209**
**29.04.2003 DK 200300642**

(43) Date of publication of application:
**01.06.2005 Bulletin 2005/22**

(73) Proprietor: **Memsflow APS**
**2200 Copenhagen N (DK)**

(72) Inventor: **USSING, Tomas**
**DK-2200 Copenhagen N (DK)**

(74) Representative: **Plougmann & Vingtoft A/S**
**Sundkrogsgade 9**
**P.O. Box 831**
**2100 Copenhagen Ø (DK)**

(56) References cited:
**US-A- 5 186 001     US-A- 5 649 423**
**US-A- 6 071 081**

## Description

FIELD OF THE INVENTION

The present invention relates to systems and methods for handling liquids in micro channels by means of vapour bubbles generated by the energy from a high-energy light source such as a laser. The present invention relates furthermore to various applications of the systems and methods.

TECHNICAL BACKGROUND AND PRIOR ART

During the last 15 years there has been an increasing interest and effort in automating chemical and biological analysis in so-called analytical micro system. A number of overlapping terms such as microTAS (micro total analysis system), Lab-on-a-chip, biochips, and bioMEMS have been suggested to describe the present art. Despite different terminology they share the objective of creating fast and cost-efficient chemical and biological analysis systems.

The development of these systems has faced numerous challenges and the most basic challenge of them all is that of handling liquid reagents in the micro systems in a repeatable and timely well controlled manner. Several micro pumping schemes have been presented over time.

One scheme of pumps is based on electroosmotic flow/force (EOF) and was first associated with capillary electrophoresis. The EOF phenomenon arises from the interaction of ions in solution with fixed ionic sites on the micro channel walls. Upon application of the electric field along the micro channel, this interaction results in a net flow of liquid in the micro channel to the electrode carrying the same polarity as the wall charge. In the case of silicon oxide surface, the wall charge is anionic due to ionization of acidic silanol groups, and EOF carries the micro channels contents towards the cathode. Micro systems using EOF pumping is for example described by Manz et al.

While being useful in electrophoretic separation systems, the EOF pumps are not always suitable for basic pumping since they tend to affect and be affected by the liquid sample they are moving. Also, as the EOF systems rely on connecting external electrodes for contacting the liquids in the micro channels, these will impose limitations to the number of EOF capillaries to be implemented on a single substrate. Another disadvantage of EOF pumping is that the formation of gas bubbles due to electrolysis. Unwanted gas bubbles within the electric current path, i.e. in the liquid of a micro channel will either significantly affect or in fact stop the pumping since the electrical current may be reduced or even interrupted by blocking gas bubbles.

Another type of pump is the so-called positive displacement pump or membrane pump, where an actuation results in pressure difference in the liquid and thus in a flow. The actuation has been achieved by several means such as piezo electric elements, pneumatics, magnetic forces, electrostatic forces and by photo-thermal actuation.

Photo-thermal actuation is describes in US 2003 0021694 (Yevin) where nano pumping is achieved using bubbles created by heating of a liquid through an optical fibre with a laser. The heating sites are discrete and coupling is done via manual insertion of optical fibre.

Other approaches of pumping using photo-thermal actuation are described in US 5,602,386, US 5,186,001, US 5,649,423 and US 6,071,081.

US 5,602,386 relates to a light driven actuator in which light from a light source is directed into a media via an optical fibre and said light is absorbed in said media. The absorption of the light energy results in expansion of the media and thus drives the actuation. US 5,602,386 involves static positioning of light introducing means, as well as cumbersome mechanical valves are required.

US 5,186,001 relates to a micro actuator based on heating the gas in a closed chamber with a light source, said wall having a flexible part that expands upon heating the gas and contracts upon cooling of gas. The movement of the flexible part is used as means for actuation. US 5,186,001 presents similar drawbacks as mentioned above, and also it involves a closed chamber wherein a part is a movable part acting as a reciprocating piston.

US 5,649,423 relates to a micro linear actuator with capillary force sealing. Light is from an optical fibre is absorbed in the micro linear actuator, said absorption is causing a liquid inside the actuator to evaporate. The evaporation results in an increased pressure inside the actuator and said pressure moves a piston of the actuator. US 5,649,423 involves completely enclosed working fluid acting on mechanical piston.

US 6,071,081 relates to a micro pump where pulsating heating by a laser results in expansion and contraction of a bubble in the pump chamber. The movement of the bubble acts as a pressure source and the flow through the pump is regulated via check valves at the inlet and outlet of the pump chamber. US 6,071,081 also involves static (discrete) heating source as well as mechanical in- and outlet valves.

Jun et al describes a micro fabricated pump which moves a liquid through a micro channel using moving or expanding bubbles formed by an array of electrical heater.

US 6,283,718 relates to a bubble based micro pump comprising a conical shaped chamber next to which a vapour bubble is formed by heating, e.g. using the ohmic heating either from a metal heating element or from the current running through a conducting liquid in a narrow micro channel.

US 6,513,968 relates to a method for mixing a liquid by generating a bubble using a discrete heat source such as a light source and by moving the bubble in the liquid via a temperature gradient. The movement of the bubble results in mixing of the liquid.

To summarise, the pumping schemes described in the prior art are associated with several disadvantages. Typically they have a low degree of flexibility in use since a new analytical application often requires a new design and thus production of a new biochip, which may be a time consuming and expensive process. Often one encounters incompatibility between the actuator components of the disclosed pumps and the other components of the micro system, such as detection systems, electronics for e.g. contacting the discrete heat sources, and the bioreagents within the micro system. Lack of space around micro system is also a problem since much of the equipment around the micro systems are not suitable for down scaling. Interfacing between the micro system and external control means is a big challenge and tends to require much manual work and is a significant source of error.

Finally, the high cost price per micro system may be the key barrier that prevents disposable micro systems from being an economically viable solution for modem medical diagnostics and drug screening.

SUMMARY OF THE INVENTION

The present invention relates to a generic scheme for handling liquids in a micro system, in which scheme the same movable light source, e.g. a laser, is used for one or more processes such as pumping, adjusting the temperature, mixing, marking, fluorescence excitation and for thermocycling.

It is an object of the present invention to provide a flexible and disposable micro system for analysis purposes.

It is another object of the present invention to provide a micro liquid handling and reaction facilitating system without the need of mechanical and/or electrical connections to the driving system.

It is still another object of the present invention to obtain a micro pumping system having a flexible structure allowing the use of one micro pumping system for several applications.

It is a further object of the present invention to provide a micro pumping system wherein one pumping light source may be used for processing the liquid in a number of micro channels.

The above and other objects are fulfilled by the present invention by a micro pumping system for generating a liquid flow in one or more working liquids in at least one micro channel holding the one or more working liquids, the system comprising

- a light source adapted to emit a light beam
- a substrate holding at least one micro channel with at least a first section having a first surface part and at least a second section having a second surface part,

- moving means for inducing a relative movement between the light beam and the substrate,

the means for moving being adapted to move between at least a first position in which the light beam will irradiate the first surface part and a second position in which the light beam will irradiate the second surface part whereby at least one vapour bubble is formed acting on the liquid in the first and second section of the micro channel, respectively, in response to the irradiation of the respective surface parts of the micro channel.

In a second aspect of the present invention, the above and other objects are fulfilled by a method of generating a liquid flow in at least one micro channel, the method comprising
providing at least one substrate holding at least one micro channel,
emitting at least one light beam from at least one light source,

- inducing a relative movement between the at least one light beam and the at least one substrate so that the at least first light beam in a first position irradiates the first surface part and in a second position irradiates the second surface part,
- forming at least a first vapour bubble in the at least first section in response to the irradiation of the first surface part,
- forming at least a second vapour bubble in the at least second section in response to the irradiation of the second surface part,

the at least first and second vapour bubbles acting on the liquid in the first and second section of the micro channel, respectively, so as to generate a flow in the micro channel.

The substrate may be any substrate suitable for holding one or more micro channels, such as a substrate comprising glass, such as fused silica, silicon, polymer materials, such as polycarbonate (PC), polymethamethacrylate (PMMA) or cycloolefin copolymer (COC).

The distance between opposite channel walls may be selected to be between 0.1 $\mu$m-1 mm, such as between 0.1 $\mu$m -1 $\mu$m, 1 $\mu$m - 10 $\mu$m, 10 $\mu$m - 50 $\mu$m, 50 $\mu$m - 100 $\mu$m, 100 $\mu$m - 200 $\mu$m, 200 $\mu$m - 500 $\mu$m, or between 0.5 mm - 1 mm.

The term "vapour bubble" relates to the bubble that is formed by evaporating a liquid in a micro channel. The vapour from the evaporated liquid may constitute at least 25% of the molecules in the vapour bubble such as at least 40%, 50%, 60%, 70%, 80%, 90%, 95%, 97,5%, 99% or 99.5% such as at least 99.9% of the molecules. Preferably, at least 100% of the molecules in the vapour bubble are molecules from the evaporated liquid.

In a preferred embodiment, the vapour bubble expands sufficiently to block the flow of liquid through the cross section of the micro channel, where the vapour bubble is located. It is furthermore preferred that the vapour bubble does not move relatively to the position where it was formed, unless the vapour bubble is meant to be moved continuously in the micro channel led by the light beam.

The liquid may be present in one or more parts of the micro pumping system, for example in one or more micro channels in the system so that the liquid is substantially enclosed in the channels.

The light beam may be continuously irradiating the micro channel when moving from the first position to the second position, creating at least one vapour bubble travelling from the first section to the second section. The working liquid of the micro channel will flow in the same direction as the movement of the light beam Thus by manipulating the movement of the light beam, it is possible to achieve bi-directional processing, such as bi-directional pumping, in the micro channel.

The light beam continuously irradiating the micro channel or at least a surface part thereof may thus heat the liquid in the micro channel to a superheated state so that a vapour bubble is formed in the channel. By moving the light beam continuously along the channel a temperature gradient is formed in the formed vapour bubble making the vapour bubble contract and/or collapse in the cooler areas after the light beam passage and expand in the superheated areas in connection with the light beam irradiation where the liquid is being vaporised and thus is expanding. The expanding vapour bubble will form a pressure pulse in the channel displacing a liquid volume in front of the pulse.

The energy density of the light beam irradiating the surface section is preferably chosen to be sufficiently high so that the vaporisation of a part of the liquid is accomplished substantially immediately. The fast and homogenous vaporisation will form a protective vapour layer serving to protect the remaining part of the liquid in the channel section from being heated. This phenomenon is also known as "film boiling".

Alternatively, discrete sections of the channel may be irradiated, so that at least a first vapour bubble may be formed in response to the light beam irradiating the first surface part and at least a second vapour bubble may be formed in response to the light beam Irradiating the second surface part. Thus, a sequential irradiation of the micro channel section provides sequentially vapour bubble formation. Also when discrete sections of the channel are Irradiated, bi-directionality is ensured by manipulating the light beam. This embodiment may be implemented so that the at least second vapour bubble is allowed to expand before the first vapour bubble is collapsed. It is hereby possible to control the direction of the flow generated and e.g. suppress back flow by using the first vapour bubble as a flow restriction. Hereby, for example pumping of a liquid volume from e.g. one reservoir to another may be facilitated similarly to the pumping obtainable using the continuos irradiation of the micro channel.

It is to be envisaged that the configurations disclosed herein may be obtained equally by using continuous or discrete irradiation of a micro channel.

In another embodiment of the invention a micro pumping system for pumping a liquid In a micro channel is provided, the system comprising

- a substrate holding at least one micro channel with at least a first section having a first surface part and at least a second section having a second surface part,
- a light source adapted to emit a light beam, and
- means for moving the light beam in relation to the substrate,

the means for moving being adapted to move between at least a first position in which the light beam will irradiate the first surface part and a second position in which the light beam will irradiate the second surface part whereby at least a first vapour bubble is formed acting on the liquid in the first section and at least a second vapour bubble is formed acting on the liquid in the second section of the micro channel, respectively, in response to the irradiation of the respective surface parts of the micro channel, wherein the at least second vapour bubble is formed before the at least first vapour bubble is collapsed so as to provide a pumping action/so as to move liquid in the direction from the first to the second section.

In still another embodiment of the invention a method of pumping a liquid in a micro channel is provided, the method comprising the steps of

- providing a substrate holding at least one micro channel with at least a first section having a first surface part and at least a second section having a second surface part,
- emitting a light beam from a light source, and
- inducing a relative movement between the light beam and the substrate, so that the light beam in a first position irradiates the first surface part and in a second position irradiates the second surface part
- forming at least a first vapour bubble in the at least first section in response to the irradiation of the first surface part,
- forming at least a second vapour bubble in the at least second section in response to the irradiation of the second surface part,

wherein the at least second vapour bubble is formed before the at least first vapour bubble is collapsed so as to provide a pumping action.

The micro channel may have one or more regions, to be sequentially irradiated by the light beam, each region comprising a plurality of sections to be sequentially or continuously irradiated by the light beam. Hereby, for example a pumping effect may be enhanced by having more pumping regions in continuation of each other in one channel.

Furthermore, a region may be irradiated by the light beam a number of times. Hereby, for example a plurality of droplets may be expelled from a channel, each droplet being expelled in response to the irradiation of the respective region.

A region in a micro channel may be irradiated continuously or sequentially a number of times in either direction. Thus, the system may be bi-directional, so that for example a flow may be generated in one direction at one point of time and in the opposite direction at another point of time.

Furthermore, it is envisaged that the order in which separate regions is to be irradiated and the process to be performed in a specific region, may be set by a user, e.g. by means of programming any programmable memory, e.g. in the form of a computer, connected to the system.

The flow in a micro system containing a specific pumping channel may be generated over a predetermined distance, so that a region wherein a flow is generated may cover a length from 1 $\mu$m - 1 cm of the micro channel, such as between 1 $\mu$m - 10 $\mu$m, 10 $\mu$m - 50 $\mu$m, 50 $\mu$m - 100 $\mu$m, 100 $\mu$m - 200 $\mu$m, 200 $\mu$m - 500 $\mu$m, 500 $\mu$m - 1 mm, 1 mm - 5 mm, or between 5 mm - 1 cm. Furthermore, the flow in a micro system containing a specific pumping channel may be generated over a predetermined distance, so that a region wherein a flow is generated may cover a length of at least 1 $\mu$m, such as at least 10 $\mu$m, 25 $\mu$m, 50 $\mu$m, 75 $\mu$m, 100 $\mu$m, 250 $\mu$m, 500 $\mu$m, 1 mm, 5 mm, 1 cm, 5 cm, or 50 cm such as at least 100 cm.

Likewise, a part of micro channel wherein a liquid volume is to be displaced may have a length of at least 1 $\mu$m, such as at least 10 $\mu$m, 25 $\mu$m, 50 $\mu$m, 75 $\mu$m, 100 $\mu$m, 250 $\mu$m, 500 $\mu$m, 1 mm, 5 mm, 1 cm, 5 cm or 50 cm such as at least 100 cm.

The heat may be generated in the channel wall, in the junction between the channel wall and liquid in the channel or it may be generated directly in liquid in the channel by providing a channel wall being optically transparent to the light beam emitted from the light source.

In a preferred embodiment at least a part of the substrate is transparent to the wavelength(s) of the light beam emitted from the light source. When for example silicon is used as a substrate material, it is preferred to use an infra red laser with a wavelength ranging from 700 nm to 3000 nm as a light source. When the substrate material is for example glass or plastics that are transparent in the visual wavelength range, red light diode lasers with a central wavelength of e.g. 632 nm, 635 nm, 670 nm, 680 nm or 720 nm.

In order to improve the conversion of optical energy into heat, at least one surface part of the micro channel to be irradiated by the light beam may comprise a light absorbing material for absorption of optical energy. The light absorbing material may be any material readily absorbing the optical energy emitted from the light source and at the same time being insensitive to the temperature increase of the material during irradiation, such as aluminium nitride, or especially when silicon is used as a substrate material doped silicon such as boron doped silicon or phosphorus doped silicon, or a polymer containing additives enhancing absorption of specific or multiple wavelengths (e.g. commercially available products from Clearweld, US or Epolin, US). The light absorbing material may form an integral part of the channel wall ensuring that the thermal resistance of the channel wall is sufficiently low to allow a substantial amount of heat to be transferred to the channel. The light absorbing material may thus act as a hot plate, for heating liquid in the channel. The light absorbing material may be absorbent to a narrow region of the light spectrum, or it may be completely impermeable and absorbent to any wavelength from UV to MIR (Mid Infra Red)

Also, a substrate may be a light absorbing material and/or a light absorbing material may be a substrate.

The light absorbing material may be painted, sprayed, deposited or spotted on the channel wall and it may form a next layer on the channel wall or be absorbed into the channel wall. The micro channels of the micro system may be formed by first and second substrates, said first substrate being transparent to the light beam and said second substrate having a high level of absorption of said light beam.

It is preferred that the light absorbing material is chosen so that at least 1% of the intensity of the light beam irradiating the channel wall is absorbed in the light absorbing material, such as at least 2%, 3%, 4%, 5%, 10%, 15%, 20%, 25%, 30%, 35%, 40%, 45%, 50%, 55%, 60%, 65%, 70%, 75%, 80%, 85%, 90%, 95%, or 99%, such as at least 99.99% of the intensity of the light beam.

The term "liquid" should be interpreted broadly and comprises as non-limiting examples homogeneous liquids, suspensions, i.e. liquids comprising particulate matters such as micro particles or cells, liquids comprising small gas bubbles, aqueous liquids, organic liquids, two-phase systems and hydrophobic liquids and hydrophilic liquids.

In a preferred embodiment a degassed liquid, i.e. a liquid with a minimum of dissolved gasses, is used, since dissolved gasses may be deposited as gas bubbles in the micro channel when the temperature of the liquid is raised to its boiling point. The deposited gas bubbles may be unwanted when working the present invention. Degassing of the used liquids may especially be important when using aqueous liquids in a channel system with a hydrophobic channel wall, since the gas bubbles may stick to the channel wall and accumulate over time. An alternative and/or a supplement to degassing may be to add a detergent to the liquids.

The vapour bubble may be formed in the liquid by nucleation or the vapour bubble may be formed by film boiling a part of the liquid in the transition from the channel wall to the liquid to form the vapour bubble.

The optical energy of the light beam may be absorbed in the liquid without a light absorbing material near the channel wall, or the light beam may be absorbed both in the liquid and in a light absorbing material near the channel wall. If only the liquid is to absorb the optical energy of the light beam, it is preferred that the absorbance of said liquid at a wavelength of said light beam is at least 0.1, such as at least 0.5, 1, 2, 3, 4, 5, 6, 8, 9, 10, 15, 20. The absorbance may be measured by standard spectrophotometers. If the measured absorbance is higher than 1.5, the skilled person will know how to dilute the liquid to obtain an absorbance of the diluted liquid between 0.1 and 1.5 and multiply the absorbance from the diluted sample with the factor of dilution to obtain a calculated absorbance.

The term "working liquid" is used for describing a primary liquid in the micro pumping system, thus for example any liquid being active, chemically or biologically, or any liquid containing particulate matters.

The term "buffer liquid" is used for describing a liquid present in the micro channel but not related to any chemical or biological activities being performed in the micro channel system. The buffer liquid may be chosen to be a liquid specifically adapted for use as a vapour bubble forming liquid and/or specifically chosen for the flow properties of the liquid. It is preferred that the buffer liquid does not mix with the working liquid.

Often and especially in biological systems, the liquid in the micro channel is heat sensitive so that it is not desirable to heat this liquid for forming a vapour bubble, neither by nucleation nor by film boiling. In a preferred embodiment of the invention, the vapour bubble is thus formed in a buffer liquid either by film boiling at least a part of the buffer liquid in response to the light irradiation or by nucleation in response to the light beam irradiation as described above. The buffer liquid may be comprised in the micro channel, at least in the region wherein a vapour bubble is to be formed.

In another embodiment, at least the part of the liquid to be heated, being either the working liquid or the buffer liquid, may be held in a cavity associated with the micro channel e.g. to form a connection between the cavity and the micro channel, the surface part of the micro channel being a surface part of the cavity. Hereby, a surface part of the cavity is irradiated by the light beam and the heat is dissipated either in a light absorbing material of the surface part or directly in the liquid in the cavity. For example, when the working liquid in the micro channel comprises a suspension of heat sensitive cells having a predetermined diameter, the dimensions of the cavity may be selected so as to ensure that none of these heat sensitive cells enters the cavity, whereas the vapour bubble is formed so as to act also on the working liquid in the micro channel. Alternatively, at least a part of the liquid in the cavity may be a buffer liquid.

The cavity may thus have an opening towards the micro channel, the opening being smaller than cells to be transported by the working liquid in the micro channel so as to prevent these from suffering thermal damage, e.g. being damaged by a temperature exceeding 37 degrees C. Alternatively, the cavity may comprise a buffer liquid which may even be separated from the micro channel by a membrane.

The flow in micro systems may often be laminar flowing liquids and likewise the generated flow will often be laminar. This may be used to have a laminar flow of working liquid and buffer liquid, respectively, flowing in the channel substantially without any mixing taking place. Hereby, the vapour bubble may be formed in the buffer liquid without the provision of special cavities and without heating of the working liquid.

In a preferred embodiment, the Reynolds number of the flow of the liquid is at most 100 such as at most 10, 5, 1, 0.5, or 0.01, such as at most 0.001. The Reynolds number, Re, is the ratio of liquid inertia stress to viscous stress and is defined as

$$Re = \frac{v \cdot D}{v},$$

where v is the average linear velocity of the liquid in the micro channel, D is the diameter or the average cross sections dimension of the micro channel, and v is the kinematic viscosity of the liquid at the operation temperature.

It is a further advantage of using a buffer liquid that the characteristics of the buffer liquid may be adjusted to the specific use of the buffer liquid without consideration of other properties of the liquid, such as the suitability of the liquid for suspension of specific cells. Hereby, the buffer liquid may be engineered, e.g. with respect to vaporisation properties, vapour bubble formation properties, surface tension, heat conductivity, absorption of specific wavelengths, etc.

The buffer liquid may be present in the entire micro system or at least one section of the micro channel may comprise the buffer liquid. A section of the micro channel may comprise both the buffer liquid and the working liquid, whereas another section may comprise only the buffer liquid. For example, an end section of the micro channel may comprise the buffer liquid.

It is an advantage of having separate sections of the micro channel comprising the buffer liquid or buffer liquids, that the heating of a buffer liquid in close proximity to a heat sensitive liquid is avoided. In a preferred embodiment one or more of the sections comprising the buffer liquids are end-sections so that the buffer liquid acts as a piston on the working liquid.

There is often a need for heating at least a part of a working liquid In a micro system, especially when using chemical or biochemical liquids, when a reaction is to be monitored or even facilitated through reaching certain temperatures in the micro system, etc.

Thus, in another embodiment of the present invention the micro channel system may comprise

- a substrate holding at least one micro channel with at least a first section having a first surface part,
- a light source adapted to emit a light beam, and

- light beam control means for controlling parameters of the light beam,

wherein the light beam control means are adapted to control the parameters of the light beam to provide heating of a liquid in the micro channel.

In still another embodiment of the present invention, a method of heating a liquid in a micro channel is provided, the method comprising

- providing a substrate holding at least one micro channel with at least a first section,
- emitting a light beam from a light source towards the at least first section, and
- controlling parameters of the light beam,

so that the liquid in the micro channel is heated.

The heating of the liquid in the micro channel is, thus, provided through heating the liquid by the light beam. The amount of heat dissipated in the liquid is dependent of a number of factors, such as light beam parameters, thermal conductivity of the cavity wall and/or of an absorbing means forming part of the wall, heat capacitance of the liquid to be heated, etc.

By selection of the proper light beam parameters according to the liquid, and the micro system details, a predetermined temperature may be obtained in the liquid to be heated. As mentioned above, the liquid may be heated for example by reducing the power of the light beam in relation to the power needed for vapour bubble formation. The energy density and/or the pulse width needed to heat at least a part of the liquid may be orders of magnitude lower than the energy density needed for forming a vapour bubble in the liquid, either by nucleation or by film boiling. The power needed to evaporate or heat the liquids depends several parameters e.g. on the actual dimensions of the micro channel, the substrate(s) holding the micro channel, the liquid in the micro channel, and on the way in which vapour bubble formation and/or heating is performed.

Generally, the energy density of the light beam may be within the range 0.001 mW/$\mu$m$^2$ - 10 W/$\mu$m$^2$ such as within 0.001 mW/$\mu$m$^2$- 0.1 mW/$\mu$m$^2$, 0.1 mW/$\mu$m$^2$ - 1 mW/$\mu$m$^2$, 1 mW/$\mu$m$^2$ - 50 mW/$\mu$m$^2$, 50 mW/$\mu$m$^2$ - 250 mW/$\mu$m$^2$, 250 mW/$\mu$m$^2$ - 500 mW/$\mu$m$^2$, 0.5 W/$\mu$m$^2$ - 1 W/$\mu$m$^2$, or within 1 W/$\mu$m$^2$ - 10 W/$\mu$m$^2$. The energy density of the light beam may be at least 0.001 mW/$\mu$m$^2$ such as at least 0.001 mW/$\mu$m$^2$, 0.01 mW/$\mu$m$^2$, 0.1 mW/$\mu$m$^2$, 1 mW/$\mu$m$^2$, 10 mW/$\mu$m$^2$, 50 mW/$\mu$m$^2$, 100 mW/$\mu$m$^2$, 250 mW/$\mu$m$^2$, 500 mW/$\mu$m$^2$, 1 W/$\mu$m$^2$, or as least 5 W/$\mu$m$^2$ such as at least 10 W/$\mu$m$^2$.

It is envisaged that the light energy density for a given application may be chosen by setting up a simple set of experiments where the light energy density is varied, observing the results of the various light energy settings and choosing the light energy density where the appropriate vapour bubble formation and/or mixing and/or heating takes place. Furthermore visualisation means such as a light microscope or a fluorescence microscope may be used for evaluating the results of the light energy density setting. Still further fluorescent or coloured liquids may be employed for visualising mixing or vapour bubble formation and for example a zone of a fluorescent liquid marker or a liquid comprising fluorescent micro particles may be employed for visualising the results of the pumping and/or valve function and/or mixing and/or heating.

To obtain heating of the liquid and/or vapour bubble formation by the same light source in different points of time and/or in different parts of the micro system, light beam control means may be provided for controlling parameters of the light source. Hereby, light beam parameters, such as power, pulse width, energy density, and velocity of the light beam relative to the micro channel may be controlled so that the light beam control means may control the parameters of the light beam to provide heating of a liquid in the micro channel. It is envisaged that the light beam control means may also be provided to control the light beam parameters of light beam(s) used for vapour bubble formation, so as to allow for, for example, different designs of different sections of micro channel(s).

The energy density, the power and/or the pulse width of the light beam may thus be controlled to be adequate to heat at least a part of the liquid in the respective section of the micro channel to a temperature being below the boiling point of said liquid, so that substantially no vapour bubbles are formed in the liquid, but still to a temperature sufficient e.g. for a specific reaction or process to take place, e.g. a nucleic acid amplification process such as the polymerase chain reaction (PCR), where reactions takes place at three different temperatures below the boiling point (denaturation/melting at about 90-95 annealing about 50-65 °C and finally polymerisation at 70-80 °C).

For example, the liquid to be heated may comprise a nucleic acid (NA) amplification mixture comprising a primer, a nucleic acid, a monophosphate nucleotide and an enzyme having a polymerase activity.

The NA amplification may be performed using a technique selected from the group consisting of Polymerase Chain Reaction techniques (PCR), Strand Displacement Amplification (SDA), Ligation-Rolling Circle Amplification (L-RCA) and their combinations/modifications. These methods are well known to the person skilled in the art and are described for example in Sambrook et al.

Furthermore, the method of performing a nucleic acid (NA) amplification process in a micro pumping system according to the present invention may comprise the steps of

a) providing a micro pumping system,

b) providing an NA amplification mixture in a section of a micro channel, said NA amplification mixture comprising a primer, a nucleic acid, a monophosphate nucleotide and an enzyme having a polymerase activity,

c) heating the NA amplification mixture, using the light source, to achieve melting of double stranded DNA,

d) cooling the NA amplification mixture to achieve annealing of the primer to the nucleic acid,

e) allowing the enzyme having a polymerase activity to elongate the primer.

The steps c) - e) may be repeated any number of times.

To monitor the temperature of the working liquid, a thermopile element, such as an infrared detector, may be provided for detection of liquid temperature. In a preferred embodiment the thermopile element is positioned so that e.g. mid infrared (MIR) light emitted from a heated part of the liquid is transmitted to the thermopile element via the same physical light path that is used for directing the light beam, save that a beam splitter may transmit a part of the transmitted MIR light to the thermopile instead of into the light source.

The moving means for inducing the relative movement between the light beam and the substrate may comprise means for moving the substrate, and/or means for moving the light source and/or means for moving the light beam. The substrate may for example be provided in a Compact Disc like system, wherein the substrate is rotated in front of a light source being movable transversal to the direction of rotation, for example in a radial direction.

The means for moving the light beam may comprise means for deflection and/or diffraction of the light beam, such as mirrors, prisms, gratings, holograms, etc.

The means for moving may further or alternatively comprise a motor, such as a step motor e.g. in connection with a deflecting mirror to form a galvanometer, or preferably, the means for moving may comprise piezoelectric elements, thus using the piezoelectric effect to induce a motion in the means for deflection and/or diffraction. Alternatively, magnetostriction may be used to induce said motion on said deflecting or diffracting elements. Alternatively the moving means mentioned above (stepper motor or piezoelectric- or magnetostrictive elements) may be implemented so as to induce relative displacement between light source and substrate of the micro system.

To provide control of the light beam irradiating surface part(s) of the channel, control means may be provided for controlling the means for inducing the relative movement between the light beam and the substrate so as to be able to control the path to be traversed by the light beam.

The control means controlling the moving means may further comprise the light beam control means.

Furthermore, focusing means may be provided for focusing the light beam at selected location(s). The focusing means may be adapted to focus the light beam in more than one plane so as to facilitate that more pumping channels may be driven sequentially by the same light source.

The selected location on which the light beam is focused may be a surface part of the micro channel, or a location in the micro channel. The focusing means may be controlled by focusing control means, and preferably be adapted to control the focus point in two or three planes. Hereby, the focussing point may for example travel along the length of a channel in either plane, for example heating the liquid or making a vapour bubble travelling along the channel length.

The control means for controlling the moving means may further comprise the focusing control means.

The velocity of the liquid in the micro channel may be controlled by controlling the speed of the means for moving and/or by controlling the energy density of the light source. There will however be a preferred energy density being dependent on e.g. the specific design of the micro pumping system, the channel dimensions, etc.

The generation of a vapour bubble may result in a pressure on the liquid in the range of $1.01 \times 10^{-5}$ Pa - $5.07 \times 10^{6}$ Pa ($10^{-10}$ atm - 50 atm), such as in the range of $1.01 \times 10^{-5}$ Pa-$1.01 \times 10^{-1}$ Pa ($10^{-10}$ atm - $10^{-6}$ atm), $1.01 \times 10^{-1}$ Pa- $1.01$ Pa ($10^{-6}$ atm- $10^{-5}$ atm), $1.01$ Pa - $10.13$ Pa ($10^{-5}$ atm - $10^{-4}$ atm), $10.13$ Pa - $101.33$ Pa ($10^{-4}$ atm - $10^{-3}$ satm), $1013.25$ Pa-$1.01 \times 10^{4}$ Pa ($10^{-2}$ atm - $10^{-1}$ atm), $1.01 \times 10^{4}$ Pa - $1.0 \times 10^{5}$ Pa ($10^{-1}$ atm - 1 atm), $1.01 \times 10^{5}$ Pa - $5.07 \times 10^{5}$ Pa (1 atm - 5 atm), $5.07 \times 10^{5}$ Pa - $1.01 \times 10^{6}$ Pa (5 atm - 10 atm), or in the range of $1.01 \times 10^{6}$ Pa - $5.07 \times 10^{6}$ Pa (10 atm - 50 atm).

The flow rate through the cross section of a micro channel, said flow rate resulting from the pumping according to the present invention may be in the range of : $10^{-15}$ L/min - 0.1 L/min (0.001 pL/min - 100 mL/min) such as $10^{-15}$ L/min - $10^{-14}$ L/min (0.001 pL/min - 0.01 pL/min), $10^{-14}$ L/min - $10^{-13}$ L/min (0.01 pL/min - 0.1 pL/min), $10^{-13}$ L/min - $10^{-12}$ L/min (0.1 pL/min - 1 pL/min), $10^{-12}$ L/min - $10^{-11}$ L/min (1 pL/min - 10 pL/min), $10^{-11}$ L/min - $10^{-10}$ L/min (10 pL/min - 100 pL/min), $10^{-9}$ L/min - $10^{-8}$ L/min (1 nL/min - 10 nL/min), $10^{-8}$ L/min - $10^{-7}$ L/min (10 nL/min - 100 nL/min), $10^{-7}$ L/min - $10^{-6}$ L/min (100 nL/min - 1 μL/min), $10^{-6}$ L/min - $10^{-5}$ L/min (1 μL/min - 10 μL/min), $10^{-5}$ L/min - $10^{-4}$ L/min (10 μL/min - 100 μL/min), $10^{-4}$ L/min - $10^{-3}$ L/min (100 μL/min - 1 mL/min), $10^{-3}$ L/min - $10^{-2}$ L/min (1 mL/min - 10 mL/min), or in the range of $10^{-2}$ L/min - $10^{-1}$ L/min (10 mL/min - 100 mL/min).

It is furthermore possible to adapt dimensions of the vapour bubble for a specific system and/or purpose. The dimensions of the vapour bubble may thus be controlled by controlling an energy density of the light source and/or a period of irradiation of a selected section. The life time of a vapour bubble may be at most 10 hours, such as at most every 5 hours, 1 hour, 30 minutes, 10 minutes, 5 minutes, 1 minutes, 30 seconds, 10 seconds, 1 second, 0.1 second, 0.01 second, 1 millisecond, 0.1 millisecond, 0.01 millisecond, 1 μsecond, or 0.1 μsecond such as at most 0.01 μsecond.

For example to obtain a valve effect in a micro channel, the energy density and/or irradiation period of the light source on a specific section, such as for example the pulse width of the light beam, may be selected so as to form a vapour bubble having dimensions corresponding to micro channel dimensions. The vapour bubble hereby fills the channel and a flow restriction may hereby be provided in the channel.

In an embodiment of the invention, the micro pump system comprises a micro valve system comprising

- a substrate holding at least one micro channel with at least a first section having a first surface part and at least a second section having a second surface part,
- a light source adapted to emit a light beam, and
- means for moving the light beam in relation to the substrate, the means for moving being adapted to move between at least a first position in which the light beam will irradiate the first surface part and a second position in which the light beam will irradiate the second surface part whereby at least a first vapour bubble is formed in liquid in the first section and at least a second vapour bubble is formed in liquid in the second section of the micro channel, in response to the irradiation of the respective surface parts of the micro channel, wherein the first and second vapour bubbles are adapted to sustain a flow restriction in the channel by fluctuating or alternating the formation respectively the collapse of the two vapour bubbles. It is preferred that the action of the micro valve causes substantially no dislocation of liquid in the channel.

In another embodiment of the invention, the method of generating a liquid flow comprises a method of dosing a micro valve in a micro pumping system, the method additionally comprising

- providing a substrate holding at least one micro channel with at least a first section having a first surface part and at least a second section having a second surface part,
- emitting a light beam from a light source, and
- inducing a relative movement between the light beam and the substrate, so that the light beam in a first position Irradiates the first surface part and in a second position irradiates the second surface part,
- forming at least a first vapour bubble in the at least first section in response to the irradiation of the first surface part,
- forming at least a second vapour bubble in the at least second section in response to the irradiation of the second surface part,

wherein the at least first and second vapour bubbles are adapted to sustain a flow restriction in the channel by fluctuating or alternating the formation respectively the collapse of the vapour bubbles to close the valve.

Two fluctuating vapour bubbles may thus be formed in for example two-adjacent sections of the micro channel, wherein the fluctuation may be controlled so as to sustain at least one vapour bubble restriction in the channel.

The vapour bubble may for example be sustained by alternating heating a first and a second edge part of the vapour bubble by irradiating corresponding surface parts of the micro channel.

It is preferred that the action of the micro valve causes substantially no dislocation of liquid in the channel.

Preferably, the valve is a normally open valve, being closed by irradiation of one or more sections of the micro channel comprising the valve for forming a vapour bubble restriction in the channel. The valve may be opened by allowing the sustained vapour bubble(s) to collapse.

At least one light source may be controlled by the moving means to generate a flow in a number of micro channels. The moving means may be controlled to irradiate a number of surface parts of a number of micro channels so as to generate a liquid flow in the number of micro channels.

The at least one light source may be a laser, such as a gas laser, a solid state laser, such as a laser diode, or the light source may be a Light Emitting Diode (LED) a Xenon lamp or any filament bulb of adequate intensity. The laser or LED may be operated in either a pulsed mode or a continuous mode, Xenon lamp or filament bulb may be modulated using mechanical blocking or deflecting means.

In an embodiment of the present invention, the distance between the neighbouring parts of two vapour bubbles in the micro channel is at least 1 micrometer, such as at least 5 micrometer, 10 micrometer, 15 micrometer, 20 micrometer, 25 micrometer, 30 micrometer, 40 micrometer, 50 micrometer, 75 micrometer, 100 micrometer, 150 micrometer, 200 micrometer, 300 micrometer, 400 micrometer, 500 micrometer, 750 micrometer, 1000 micrometer, 1.5 mm, 2 mm, 3 mm, 4 mm or 5 mm, such as at least 10 mm.

In another embodiment of the present invention, the distance between the neighbouring parts of two bubbles in a micro channel should be at most 10 mm, such as at most 5 mm, 3 mm, 1 mm, 750 micrometer, 500 micrometer, 250 micrometer, 150 micrometer, 100 micrometer, 75 micrometer, 50 micrometer, 25 micrometer, 10 micrometer or 5 micrometer, such as at most 1 micrometer.

It is often of importance to be able to mark a specific position in a micro system for evaluating the absolute volume displacement e.g. in relative with pumping, for positioning the micro system e.g. via a fluorescent channel or reservoir or plug, or for measuring the flow rate of the liquid in a micro channel. The micro-pumping system may thus in a preferred embodiment further comprise at least one reservoir for holding a marking liquid to be injected in the at least one micro channel, and a connecting bore linking the at least one reservoir with at least one section of the at least one micro channel. The marking liquid may for example be a fluorescent liquid, a coloured liquid, or a liquid comprising fluorescent micro particles. A preferred marking liquid has substantially same flow characteristics as the working liquid.

The vapour bubble formation may further be used for mixing a plurality of liquids flowing in a micro channel, as mixing in micro channel structures are almost solely dependent on mixing by diffusion.

In another embodiment of the invention, the micro pumping system comprises, a micro mixing system for mixing a plurality of liquids in a micro channel, the micro mixing system comprising

- a substrate holding at least one micro channel with at least a first section having a first surface part and at least a second section having a second surface part,
- a light source adapted to emit a light beam, and
- means for moving the light beam in relation to the substrate,

the means for moving being adapted to move between at least a first position In which the light beam will irradiate the first surface part and a second position in which the light beam will irradiate the second surface part whereby at least a first vapour bubble is formed in a first liquid in the first section and at least a second vapour bubble is formed in a second liquid in the second section of the micro channel, in response to the irradiation of the respective surface parts of the micro channel, thereby increasing the boundary surface area between the first and the second liquid and hence increase the mixing by diffusion.

In a further embodiment of the invention, the method of generating a liquid flow comprises a method of mixing, at least a first and a second liquid in a micro channel, the method additionally comprising

- providing a substrate holding at least one micro channel with at least a first section having a first surface part and at least a second section having a second surface part,
- emitting a light beam from a light source,
- inducing a relative movement between the light beam and the substrate, so that the light beam in a first position irradiates the first surface part and in a second position irradiates the second surface part
- forming at least a first vapour bubble in at least a first liquid in the first section in response to the Irradiation of the first surface part,
- forming at least a second vapour bubble in at least a second liquid in the second section in response to the irradiation of the second surface part

thereby increasing the boundary surface area between the first and the second liquid so as to obtain a mixing, e.g. by diffusion, of the at least first and second liquids.

Furthermore, a vapour bubble formed in the first liquid may be adapted to extend from the first liquid into the second liquid, and vice versa, thereby further increasing the boundary surface area between the first and the second liquid. Hereby, mixing may be obtained over a relatively short channel length section. Time of mixing may be in the range of 1 $\mu$second - 10 hours, such as in the range 1 microsecond - 10 microseconds, 10 microseconds - 100 microseconds, 100 microseconds - 1 millisecond, 1 millisecond - 10 milliseconds, 10 milliseconds - 100 milliseconds, 100 milliseconds - 1 second, 1 second - 30 seconds, 30, seconds - 1 minute, 1 minute - 10 minutes, 10 minutes- 30 minutes, 30 minutes - 1 hour, 1 hour - 5 hours, or 5 hours - 10 hours.

Furthermore, the time of mixing may be at most 10 hours, such as at most every 5 hours, 1 hour, 30 minutes, 10 minutes, 5 minutes, 1 minutes, 30 seconds, 10 seconds, 1 second, 0.1 second, 0.01 second, 1 millisecond, 0.1 millisecond, or 0.01 millisecond such as at most 1 $\mu$second.

The volume of the mixing chamber may be at least $10^{-17}$ m$^3$, such as at least $10^{-16}$ m$^3$, $10^{-15}$ m$^3$, $10^{-14}$ m$^3$, $10^{-13}$ m$^3$, $10^{-12}$ m$^3$, $10^{-11}$ m$^3$, $10^{-10}$ m$^3$, $10^{-9}$ m$^3$, $10^{-8}$ m$^3$, or $10^{-7}$ m$^3$, such as at least $10^{-6}$ m$^3$.

The volume of the mixing chamber may be at most $10^{-6}$ m$^3$, such as at most $10^{-7}$ m$^3$, $10^{-8}$ m$^3$, $10^{-9}$ m$^3$, $10^{-21}$ m$^3$, $10^{-11}$ m$^3$, $10^{-12}$ m$^3$, $10^{-13}$ m$^3$, $10^{-14}$ m$^3$, $10^{-15}$ m$^3$, or $10^{-16}$ m$^3$, such as at most $10^{-17}$ m$^3$.

The volume of the thermal reactor may be at least $10^{-17}$ m$^3$, such as at least $10^{-16}$ m$^3$, $10^{-15}$ m$^3$, $10^{-14}$ m$^3$, $10^{-13}$ m$^3$, $10^{-12}$ m$^3$, $10^{-11}$ m$^3$, $10^{-10}$ m$^3$, $10^{-9}$ m$^3$, $10^{-8}$ m$^3$, or $10^{-7}$ m$^3$, such as at least $10^{-6}$ m$^3$.

The volume of the thermal reactor may be at most $10^{-6}$ m$^3$, such as at most $10^{-7}$ m$^3$, $10^{-8}$ m$^3$, $10^{-9}$ m$^3$, $10^{-10}$ m$^3$, $10^{-11}$ m$^3$, $10^{-12}$ m$^3$, $10^{-13}$ m$^3$, $10^{-14}$ m$^3$, $10^{-15}$ m$^3$, or $10^{-16}$ m$^3$, such as at most $10^{-17}$ m$^3$.

It is envisaged that a plurality of vapour bubbles may be formed along the micro channel alternating in the first and second liquids to be mixed. Hereby, an interface between the first and the second liquid having a substantially sinusoidal or serrated form may be provided to obtain and maintain a larger interface area and thus facilitate mixing of at least the first and second liquids.

The driving hydrostatic pressure may be controlled by controlling the distance between the at least first and second sections of the micro channel.

The mixing and the heating in the thermal reactor may be performed in a continuous mode with a constant flow rate through the mixing chamber or the thermal reactor or it may be used in a batch mode in which the flow is stopped during the mixing process in the mixing chamber 24 or/and during the heating process in the thermal reactor. The time period for mixing and regulating the temperature are determined by the actual application.

It is to be understood that any of the embodiments disclosed herein may be combined in numerous ways so as to be able to build any possible micro pumping system. Thus, micro pumping systems comprising a number of pumping systems, mixing systems, and valve systems, etc., may be obtained and likewise any handling of liquids in the micro pumping system may be obtained by any combination of the methods of handling liquids, including generation of flow, mixing, heating, ventilating, etc.

BRIEF DESCRIPTION OF THE DRAWINGS

In the following, embodiments of the present inventions will be described with reference to the figures, wherein

Fig. 1 shows the general principle of pumping based on the formation of a single vapour bubble,

Figs. 2a-c show the dynamics of the general principle of pumping based on the formation of a single vapour bubble,

Fig. 3 shows the general principle of pumping based on the formation of a several separate vapour bubbles,

Fig. 4 shows a cross section of a micro channel with a light absorbing material on one of the channel walls,

Fig. 5 shows a cross section of a micro channel having a cavity for forming the vapour bubbles,

Figs. 6a and 6b show a cross section of a micro channel wherein the vapour bubble is formed in a buffer liquid,

Fig. 7 shows how a zone of buffer liquid can be injected into a micro channel from a reservoir,

Fig. 8 shows the formation of a vapour bubble in a zone of buffer liquid in a micro channel,

Fig. 9 shows the mechanism of injecting a marker liquid into the liquid of a micro channel,

Figs. 10a and 10b show a channel system for mixing two liquids in a mixing chamber,

Fig. 11a shows an embodiment of a liquid valve formed by vapour bubbles, the two vapour bubbles formed sequentially,

Fig. 11b shows an embodiment of a liquid valve formed by a vapour bubble, the vapour bubble is continuously being maintained,

Figs. 12a and 12b show two modes of providing a thermal reactor either using a beam expanding lens or by using a continuous scan over the reactor area,

Fig. 13 shows a system according to the present invention including a mixer and a thermal reactor,

Fig. 14a shows a system according to the present invention comprising a number, n, of individual analysis systems, each coupled with a capillary electrophoresis channel,

Fig. 14b shows a system according to the present invention comprising a number, n, of individual analysis systems, each coupled with a capillary electrophoresis channel and all in communication with a common channel,

Fig. 15 is a collection of frames from a recorded motion picture of a laser driven pump in action,

Fig. 16 is a schematic representation of the observed action of Fig. 15, and

Fig. 17 is a plot representing travelling distance per unit time of a bubble in the liquid of a micro channel.

DETAILED DESCRIPTION OF THE DRAWINGS

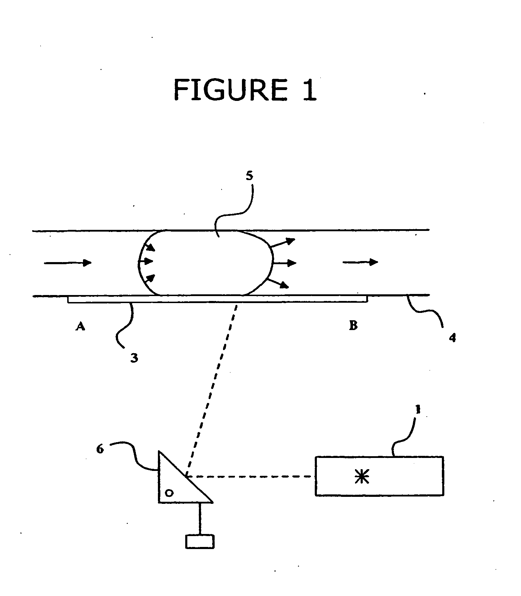

Fig. 1 shows the general principle of pumping based on the formation of a single vapour bubble. A light source 1 emits a light beam 2 that is directed towards a light absorbing material 3 at the wall of a micro channel 4. The substrate holding the micro channel 4 may be silicon and the light absorbing material 3 may be aluminium nitride. The micro channel 4 is filled with an aqueous liquid, which evaporates at the position where the light beam heats up the light absorbing material and forms a vapour bubble S. By allowing the light beam 2 to move from A to B on the light absorbing material 3, the vapour bubble 5 will move in the same direction as the light beam 2, thus forcing the liquid of the micro channel 4 to move in the same direction as the light beam 2. The light beam 2 of the light source 1 is directed by the means adapted for moving the light beam 6 which preferably is a silicon mirror moved by piezo electric actuators and controlled by a computer system (no shown). Thus, via the computer system it is possible to irradiate any position of at least part of the micro system with the light beam 2.

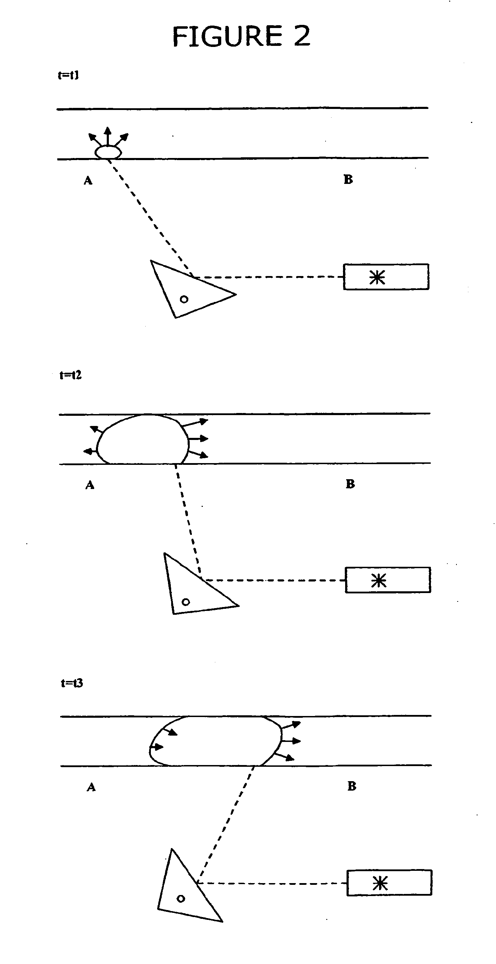

Figs. 2a-c show the dynamics of the general principle of pumping based on the formation of a single vapour bubble as illustrated in Fig. 1. In Fig. 2a the light beam heat up the wall of the micro channel near point A, and forms a local vapour bubble. The vapour bubble is still too small to result in a unidirectional flow of liquid through the micro channel. In Fig. 2b, the light beam has moved in the direction of position 8 and the vapour bubble has now expanded so much that it blocks liquid flow through the micro channel. The vapour bubble expands in the direction that the light beam moves and therefore it forces the liquid of the micro channel to move in that direction. In Fig. 2c, the light beam has moved even closer to position B and is still forcing the liquid in the same direction, resulting flow is indicated with the large arrows in the liquid. In the part of the vapour bubble that is closest to position A condensation of vapour starts reducing the vapour bubble as the wall of the micro channel starts cooling down. The contraction of the vapour bubble pulls the liquid left of the vapour bubble in the direction from A to B.

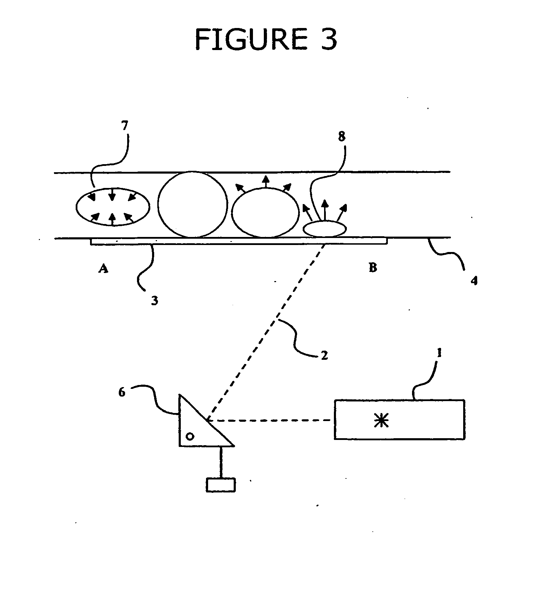

Fig. 3 shows the general principle of pumping based on the formation of a several separate vapour bubbles. The figure is a snap shot of a longitudinal cross section of a micro channel 4 after the right beam of the light source 1 has irradiated 4 different spots from position A to position B. On each spot a vapour bubble is formed. The left vapour bubble 7 is the oldest vapour bubble and has already started to condense and therefore contracts. The liquid left of the vapour bubble is putted towards the vapour bubble as a result of the contraction. The next vapour bubble to the right has reached its maximum volume and blocks the micro channel. The third vapour.bubble from left is still expanding and is therefore forcing the liquid on its right side to move in the direction from A to B. The fourth vapour bubble from 8 has just been formed and has just started to press the liquid to its right in the direction from A to B. New vapour bubbles may either be formed on new locations along the micro channel 4, e.g. not between position A and B or the vapour bubbles may again be formed between positions A and B.

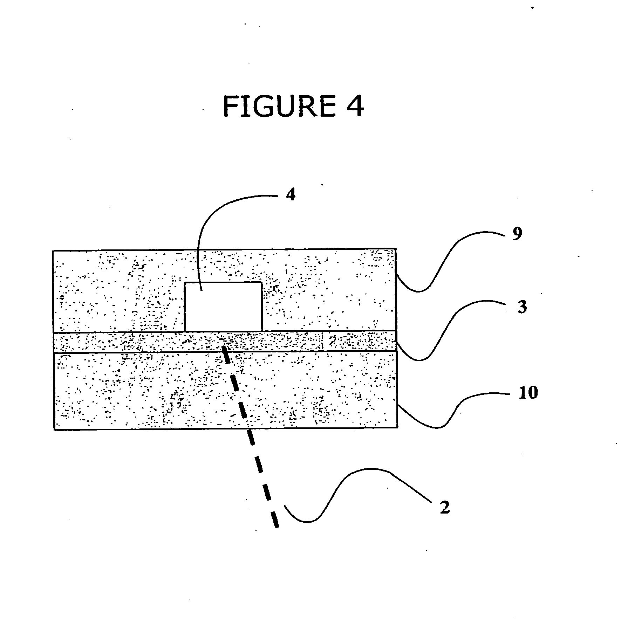

Fig. 4 shows a cross section of a micro channel 4 with a light absorbing material 3 on one of the channel walls. The micro channel 4 is formed between a first substrate 9 and a light absorbing material 3 which again is held in place by a second substrate 10. As the second substrate 10 is transparent to the wavelengths of the light beam 2 said light beam will propagate through the second substrate 10 and be absorbed in the light absorbing material 3 next to the micro channel 4. The formed energy in the light absorbing material 3 will be conducted into the liquid of the micro channel and at a sufficient light beam energy, the liquid evaporates and form a vapour bubble (the vapour bubble is not shown in this figure).

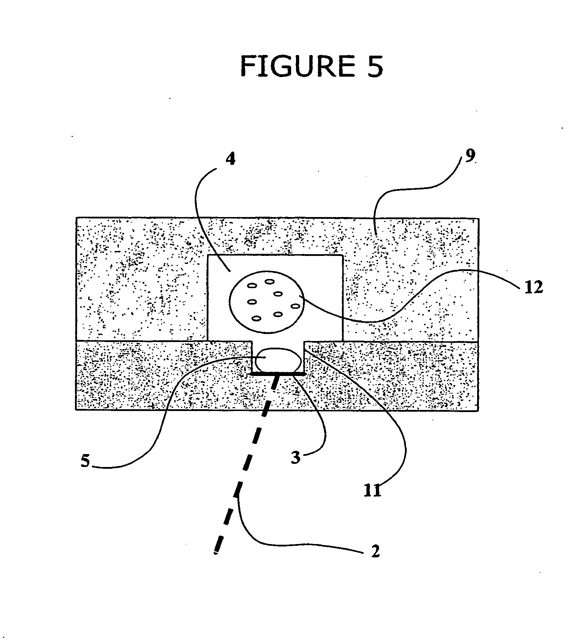

Fig. 5 shows a cross section of a micro system suitable for handling sensitive cells, said micro system having a micro channel 4 comprising a cavity or trench 11 defined in two adjoined substrates 9 and 10. The micro channel 4 including the trench 11 is filled with liquid comprising heat sensitive particulate matter such as biological cells 12. The cells 12 in the liquid will be damaged if they are exposed to temperatures that exceed 37 degrees C. Therefore the vapour bubbles 5 are formed in the cavity or trench 13, by irradiating the light beam 2 onto the light absorbing material 3 next to the trench and forming a vapour bubble 5 by evaporation of the liquid in the trench. The trench is designed sufficiently narrow so that the cells 12 are substantially kept in the wide part of the channel cross section. In the present embodiment it is preferred that the vapour bubbles 5 are created by film boiling since minimal thermal energy should be conducted to the cells 12 of the liquid.

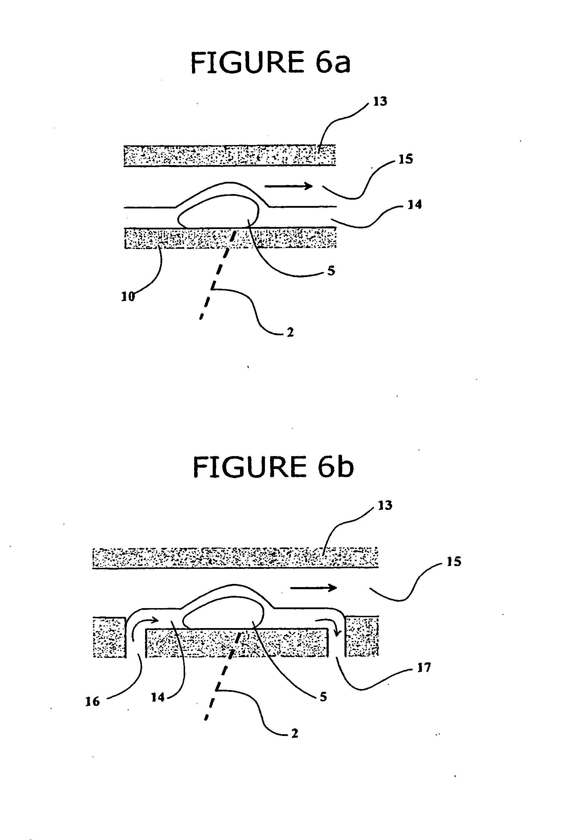

Fig. 6a shows a longitudinal cross section of a micro channel 4 in a micro system 13 wherein a vapour bubble 5 is formed in a buffer liquid 14. The buffer liquid 14 is laminated (flows in parallel with) a heat sensitive liquid 15, which e.g. could contain a heat sensitive reagent such as an antibody, a cell or an enzyme. The vapour bubble 5 is formed by irradiating the light beam 2 towards a light absorbing material (not shown) of the substrate 10 next to the buffer liquid 14, thereby forming the vapour bubble 5 and introducing most of the thermal energy in the buffer liquid 14. The vapour bubble 5 of Fig. 6a is not yet blocking the flow of liquid through the micro channel, but when it has expanded to have a size substantially corresponding to the size of the channel, it will be able to block the flow of the liquids.

Fig. 6b shows an alternative to the embodiment shown in Fig. 6a, wherein the buffer liquid 14 is introduced via the inlet 16 to the left of the position of vapour bubble formation and the leave the micro channel via the outlet 17 to the right of the position of vapour bubble formation. The heat sensitive liquid 15, which is being protected, continues to flow in the direction of the large arrow, pumped by the bubble formed in the buffer liquid 14, but otherwise substantially unaffected by the vapour bubble formation in the buffer liquid 14.

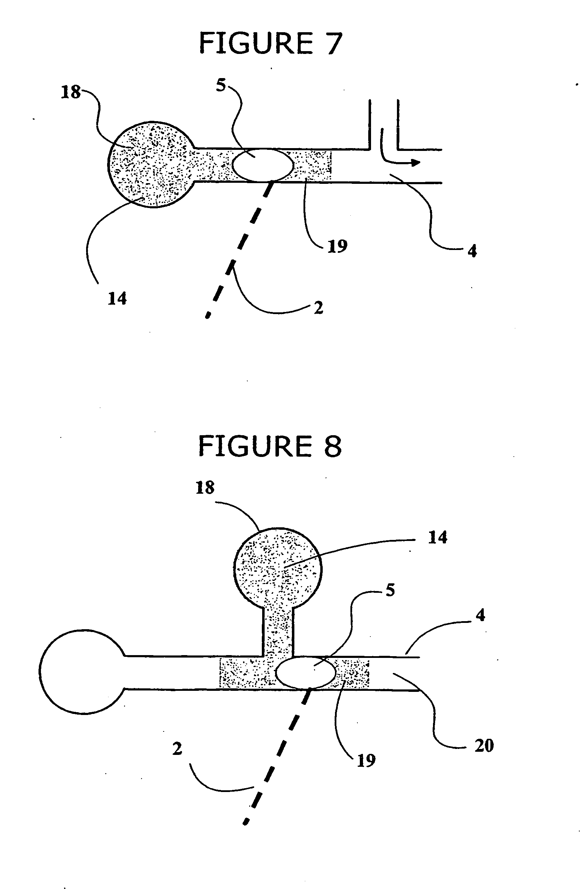

Fig. 7 shows how a zone or section of buffer liquid 19 can be injected in a liquid flow, said flow being illustrated by the arrow, in a micro channel 4 from a reservoir 18 filled with the buffer liquid 14. The reservoir 18 filled with buffer liquid 7x1 is in fluid communication with the micro channel 4 and by forming a vapour bubble 5 in the buffer liquid 14, a zone of buffer liquid 19 will be injected into the liquid flow.

Fig. 8 shows the formation of a vapour bubble 5 in a zone of buffer liquid 19 in a micro channel 4 filled with working liquid 20. The zone of buffer liquid 19 has been ejected from a reservoir of buffer liquid 18 into the working liquid 20 of the micro channel 4 as explained from Fig. 7. The light beam 2 is irradiating a given position within the zone of the buffer liquid 19, thereby forming the vapour bubble 5 in the zone of buffer liquid 19. The advantage of this approach is that the working liquid 20 of the micro channel is not exposed to high temperatures. Multiple zones of buffer liquid 19 may be injected into the working liquid 20 and the zones of buffer liquid 19 may be used as a handle to manipulate the working liquid.

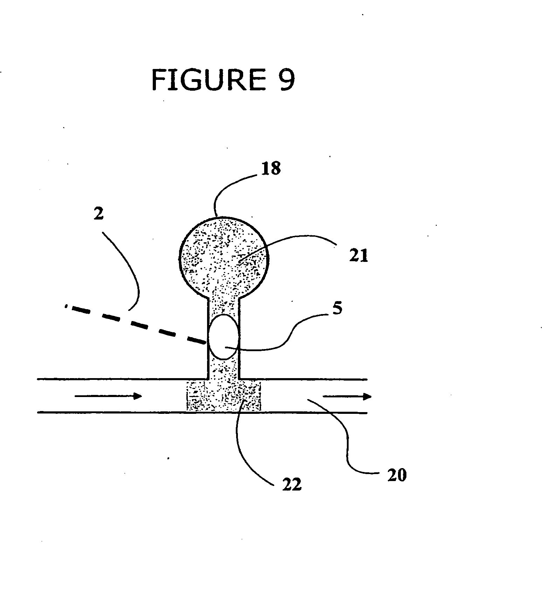

Fig. 9 shows the mechanism of injecting a marker liquid 21 into the working liquid 20 of a micro channel 4. Similar to the injection of a zone of buffer liquid 19 as described in Figs. 7 and 8, one may inject a marker liquid 21 into the working liquid 20 from a reservoir 18 filled with the marker liquid 21. The marker liquid 21 could e.g. be a liquid containing a fluorescent molecule or another entity that is easily detected. The marker liquid 21 may be injected into the working liquid e.g. to visualise the flow in the micro channels and/or to measure the flow rate within the micro channels and/or to test the system for leaking. The marker liquid 21 is injected into the working liquid 20 by forming a vapour bubble 5 in the reservoir 18 or in the channel in fluid communication with the micro channel 4 where the working liquid 20 resides. The vapour bubble 5 is formed by irradiating the light beam 2 towards a light absorbing part 3 of the channel wall, the reservoir wall and thereby creating sufficient heat to evaporate the marker liquid 21 next to the illuminated channel wall section. Alternatively, the vapour bubble may be formed in the marker liquid by directly irradiating the marker liquid (not shown) held by a transparent substrate. As the vapour bubble is formed a zone of marker liquid 22, the marker liquid will be pushed into the working liquid 20. The flow of the working liquid, which is indicated by the arrow, will move the zone of marker liquid 22 through the micro channel 4.

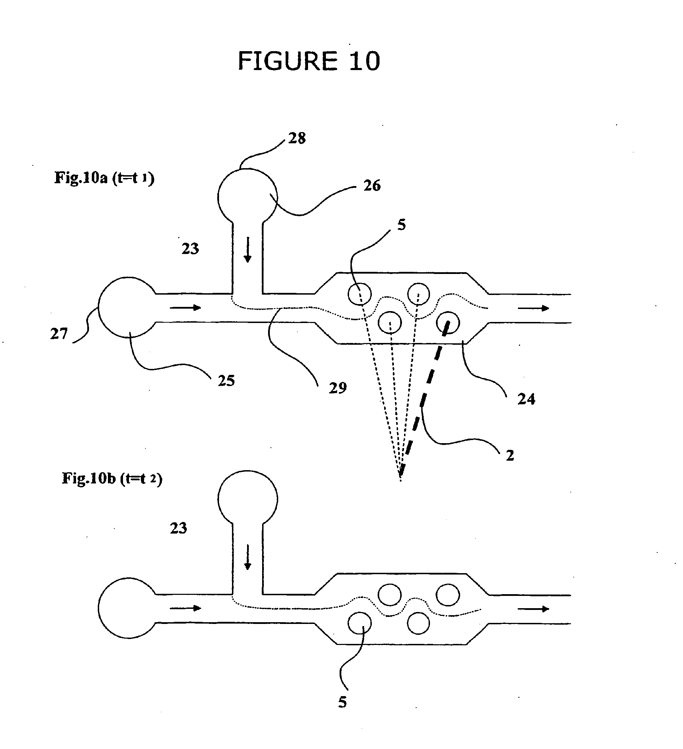

Figs. 10a and 10b show a channel system 23 for mixing two liquids in a mixing chamber 24 at times t=t1 and t=t2. The first liquid 25 flows from a first reservoir 27 and the second liquid 26 flows from a second reservoir 28. The flow (indicated by the arrows) may be generate using the pump and pumping method of the present invention, e.g. by generating vapour bubbles using a light beam 2 from a light source or by conventional pumping means such as piston pumps, EOF pumps, hydrostatic pressure, capillary flow, etc. The first liquid 25 and the second liquid 26 meet, are laminated and form a boundary layer 29, through which molecules from the first liquid can diffuse into the second liquid and vice versa. In the mixing chamber 24 the effective area of the boundary layer 29 is increased by forming e.g. 4 vapour bubbles 5 that restricts the passage of the liquids and increases the length of the boundary layer 29. The efficiency of mixing may further be improved by changing the location of the vapour bubbles 5 in the mixing chamber at t=t2 as compared to t=t1. It may be preferred to shift between two or more vapour bubble positions, e.g. the positions of Fig. 10a and the positions of Fig. 10b. The shift may occur at most every 5 minutes, such as at most every 1 minutes, 30 seconds, 10 seconds, 1 second, 0.1 second, 0.01 second or 0.001 second such as at most every 0.0001 second.

Generally, the vapour bubbles 5 may be formed anywhere in mixing chamber 24. In an embodiment of the present invention, it is preferred that the vapour bubbles 5 is positioned so as to maximise the area of the boundary layer 29 in the mixing chamber 24.

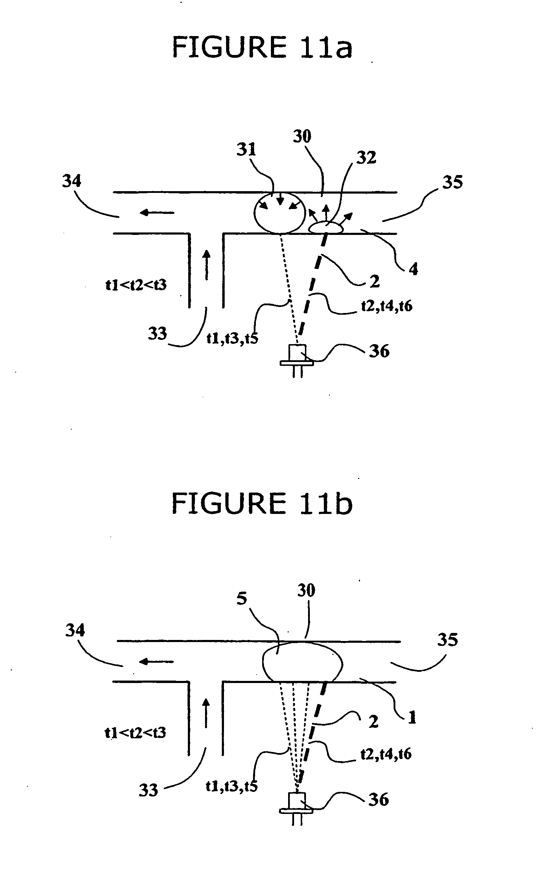

Fig. 11a shows an embodiment of a liquid valve 30 formed by vapour bubbles, the two vapour bubbles 31 and 32 are formed sequentially, i.e. one after the other. The working liquid flows through the micro channel section 33 in the direction of the arrow and if the valve was open, the working liquid would flow through both micro channel sections 34, 35. The liquid valve is created by sequentially forming at least two vapour bubbles 31 and 32 next to each other in the micro channel section 35. The vapour bubbles are formed by heating the wall of the micro channel with the light beam 2 from a diode laser 36 (the means adapted for moving the light beam is not shown), thus evaporating the liquid next to heated micro channel wall. The light beam 2 is moved in the discrete mode between the position corresponding to the vapour bubbles 31 and the position corresponding to the vapour bubble 32. Looking at the linearly increasing time series t1, t2, t3, t4, t5, t6, the light beam 2 will heat the wall of the micro channel next to vapour bubble 31 at times t1, t3 and t5. At times t2, t4 and t6, the light beam 2 will heat the wall of the micro channel next to vapour bubble 32. Fig. 11a is a snap shot of an embodiment of the valve, where the vapour bubble 31 is still sufficiently expanded to block the flow through micro channel section 35 but the vapour bubble is contracting. The vapour bubble 32 on the other hand is expanding, but still not sufficiently expanded to block the flow. It is preferred that the dynamics of the two is such that one of the vapour bubbles always blocks the flow through the relevant micro channel section. The skilled person will be able, without undue experimentation, to determine the relevant parameters for working the valve, such as the distance between the two vapour bubbles, and the timely dynamics of creating the vapour bubbles.

Fig. 11b shows another embodiment of a liquid valve 30 formed by a single vapour bubble 5, the vapour bubble 5 being continuously maintained. As an alternative to the valve embodiment shown in Fig. 11a, the flow through the micro channel section 35 may be blocked by the single vapour bubble that continuously is being maintained by the light beam 2 from the laser diode 36 (the means adapted for moving the light beam is not shown). The vapour bubble 5 may be maintained by continuously scanning the light beam 2 along the wall of the micro channel 4 in which the vapour bubble 5 should be formed and maintained. Instead of scanning the wall next to the vapour bubble 5, the light beam 2 may sequentially heat the same position of the wall of the micro channel, thus if a sufficient amount of energy is absorbed by the channel wall, the vapour bubble will remain sufficiently expanded so as to block the flow through the section of the micro channel 4.

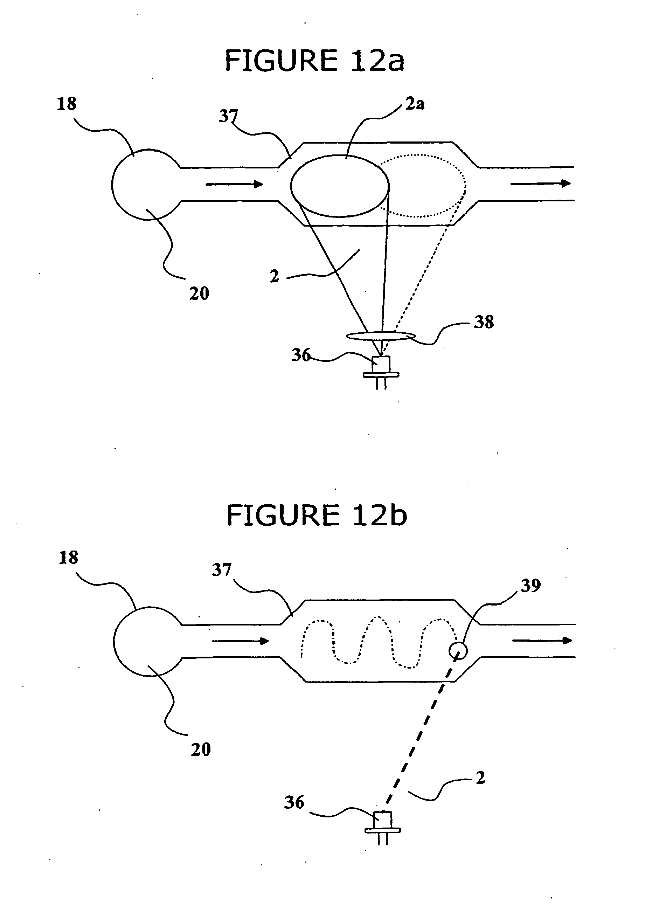

Figs. 12a and 12b show two modes of providing a thermal reactor 37 either using a beam expanding lens 38 or by using a continuous scan over the reactor area. The working liquid 20 flows from the reservoir 18 to the thermal reactor 37. In the thermal reactor the working liquid 20 is heated by a laser, e.g. using a laser diode 36 (the means adapted for moving the light beam is not shown) in combination with a beam expanding lens 38. The beam expanding lens 38 may be a part of the micro system, e.g. integrated in the micro system or attached to the micro system. By using the beam expanding lens 38 the energy of the light beam 2 will by absorbed in a larger area 2a and consequently a lower temperature increase is generated due to the lower optical energy density of the light beam. Instead of resulting in local evaporation of the working liquid 20 of the thermal reactor 37, a larger portion of the working liquid 20 is now moderately heated.

Fig. 12b shows an embodiment of the thermal reactor 37, where the energy of the light beam 2 is distributed over the thermal reactor by performing a rapid scan 39 over the thermal reactor 37 with the light beam 2.

In an embodiment of the present invention, the working liquid 20 is flowing through the thermal reactor 37 during the heating process, thus the thermal reactor 37 may work in a continuous mode. In an alternative embodiment, the working liquid 20 is stopped in the thermal reactor 37, i.e. it does not flow through the thermal reactor 37 during the heating process, thus the thermal reactor may work in a batch mode. The flow through the thermal reactor 37 may be stopped using conventional valves or by using a valve 30 according to the present invention.

The thermal reactor 37 has multiple applications, since regulation of the temperature is critical for obtaining a good repeatability of chemical reactions. Thermocycling of a PCR mixture is one of the very interesting applications of the thermal reactor. A PCR mixture is pumped into the thermal reactor 37, and the thermal reactor 37 may be used in the batch mode as described above. So-called thermocycling is performed in the thermal reactor 37. In one cycling, the PCR mixture is first heated to about 90-95 degrees C, then it is allowed to cool down to 55-65 degrees C and finally the temperature is raised to 75 degrees C. One thermocycle results typically in a doubling of the concentration of a selected DNA sequence. Typically, the thermocycling is repeated 15-30 times, which may amplify the concentration of the selected DNA sequence with as much as a factor 1.000.000.

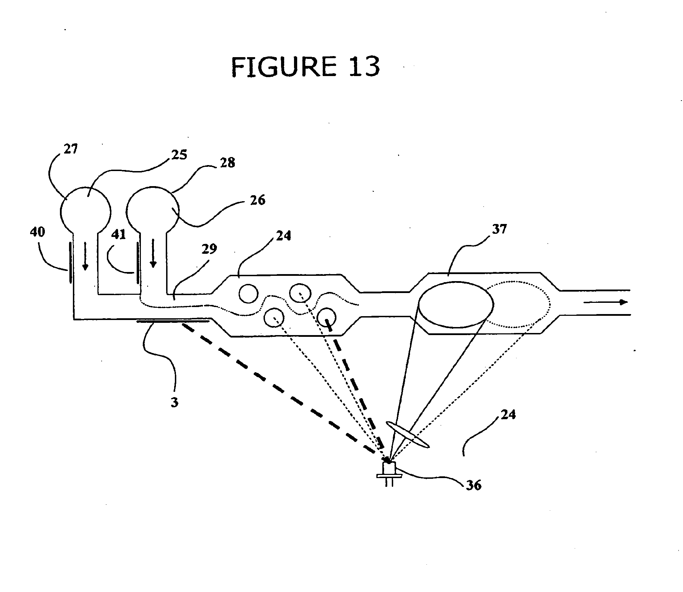

Fig. 13 shows a system according to the present invention including a mixer and a thermal reactor. The two working liquids, 25 and 26, flow respectively from the reservoirs 27 and 28. The flow may be generated by pumping according to the present invention using the light absorbing material 3, or alternatively pumping from the individual reservoir using the two light absorbing materials 40 and 41. The two working liquids are laminated, resulting in the formation of a boundary layer 29 between the two working liquids. The laminated working liquids flow into the mixing chamber 24 and mixing is performed as described above. The mixed liquids flow into the thermal reactor 37 and are heated using a laser diode 36 as light source (the means adapted for moving the light beam is not shown) and e.g. a beam expanding lens 38. The micro system shown in Fig. 13 may be run in a continuous mode with a constant flow rate or it may be used in a batch mode in which the flow is stopped during the mixing process in the mixing chamber 24 or/and during the heating process in the thermal reactor 37. The time period for mixing and regulating the temperature are determined by the actual application.

In the present embodiment the light beam from a laser diode 36 is used for pumping the two working liquids 25, 26, for mixing the liquids and for heating the liquids in the thermal reactor 37. Furthermore, the light beam 2 of the laser diode 36 may be employed in the detection of molecules in the working liquids. In the case of fluorescence detection, the laser diode 36 may provide light for exciting the fluorescent molecules and in the case of absorbance measurements the laser diode 36 may provide the light to be absorbed in the working liquids.

Generally, the detection may be equally performed in a micro channel, a mixing chamber or a thermal reactor.

Fig. 13 may be used for performing a PCR process, which is a process for amplifying nucleic acid molecules such as DNA. The reservoir 27 could contain a working liquid 25 comprising the relevant reagents for performing a PCR process and the reservoir 28 could contain a working liquid 26 comprising a liquid sample from a patient that may or may not be infected with a pathogenic bacteria. If the patient is infected the DNA of the pathogenic bacteria is present in the liquid sample. The liquid sample and the reagents for performing the PCR process are laminated, mixed in the mixing chamber 24 and thermocycled in the thermal reactor 37. The working liquid 20 could comprise a pair of primers which are known to be useful for amplify DNA of the pathogenic bacteria, a polymerase enzyme, triphosphate-nucleotides and a salt and a pH-buffer, e.g. as described in Sambrook et al.

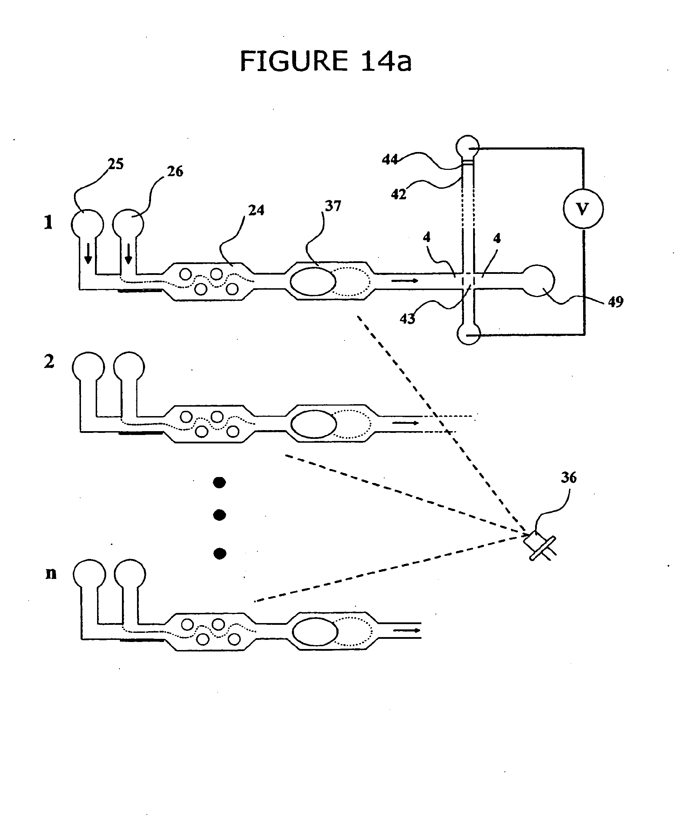

Several channel systems may be present on or in the same micro system such as shown in Fig. 14a. Here, a number, n, of individual channel systems, are presented, where each channel system is coupled with a capillary electrophoresis channel 42 (only shown for channel system 1), n being an integer number. Similar to Fig. 13, the channel system comprises a mixing chamber 24 and a thermal reactor 37. The two working liquids 25 and 26 flow from their reservoirs, are laminated and flow into the mixing chamber 24. After the mixing chamber 24 they flow into the thermal reactor 37, and subsequently the mixture of the two liquids flows into the loading interception 43 between the CE-channel 42 and the micro channel. The small volume of mixture in the loading intersection can be injected and separated using the capillary electrophoresis channel 43. Fluorescence detection, e.g. at the detection position 44 may be performed using the laser diode 36 as excitation source. The actual fluorescence may be measured by a light detector, such as a photo multiplier tube, a photodiode, an avalanche photodiode, a CCD camera or/and equivalent devices. The liquid that is not separated flows into a waste reservoir.

In an embodiment of the present invention it is preferred to stop the flow in the part of the micro channel that intersects the CE channel 42, e.g. using the vapour bubble valves of the present invention or other types of valves.

The combination of mixing chamber 24, thermal reactor 37 and capillary electrophoresis (CE) is very useful for genetic analysis in general and for the PCR process in particular. The amplification product of the PCR process may be separated in the CE micro channel 42 and a fluorescent PCR product, i.e. the amplified DNA sequence, may be detected at the detection position 44.

The other channel systems 1, 2, ..., n may be individual channel systems in the same micro systems. Generally, the number of individual channel systems may be at least 2, such as at least 3, 4, 5, 10, 15, 20, 25, 30, 50, 75, 100, 200, 500, 1.000, 5.000, 10.000, 20.000 or at least 30.000, such as at least 50.000 individual channel systems.

The laser diode 36 may be able to perform pumping, mixing, thermal treatment, and/or valve action (not shown in Fig. 14a) in each individual channel system for the micro system.

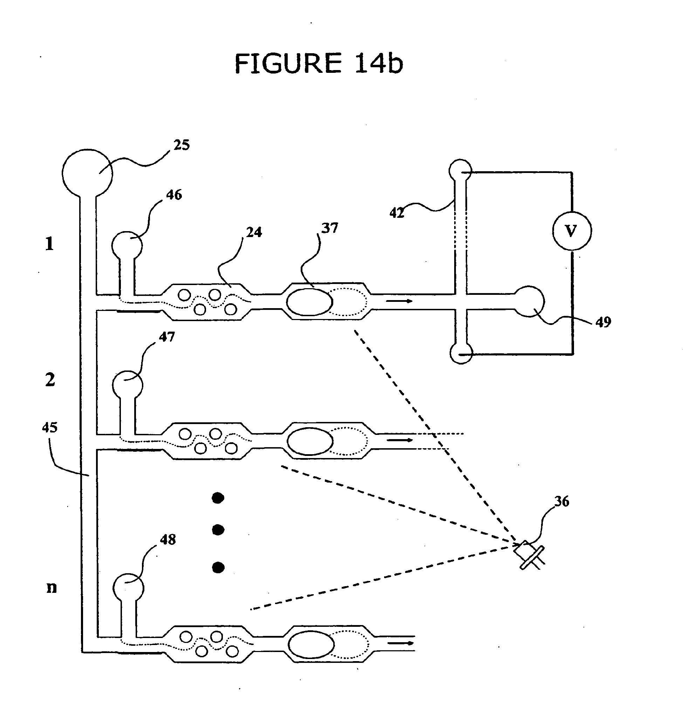

Fig. 14b shows a system according to the present invention comprising a number, n, individual channel systems, each coupled with a capillary electrophoresis micro channel 5 and all in communication with a common micro channel 45. This micro system is well suited for so-called high throughput screen, in which e.g. a large number of drug candidates are screened for a specific interaction with e.g. a receptor. The reagent working liquid 25 could comprise fluorescently labelled receptors and multiple sample working liquids, e.g. 46, 47 and 48 could comprise the individual drug such that one working liquid comprises one drug candidate. The multiple sample working liquids, 46, 47 and 48, are mixed with the reagent working liquid 25 in their respective mixing chambers and allowed to incubate in the respective thermal reactors. Finally, the product of the respective reactions are loaded in the individual CE micro channels, the reaction product is separated and the amount of drug candidate bound to the fluorescently marked receptor is quantified 5 by fluorescence detection.

It is also possible to use a number of the individual channel systems for calibrating the working liquids and use the remaining channels systems for the analysis.

The micro systems and methods of the present invention may be used for of applications such e.g. for analysis purposes such as diagnostics or high through put screening or for synthesis e.g. of combinatorial chemical libraries.

The micro systems and methods of the present invention may be used for detecting 5 genetic diseases e.g. by detecting genetic mutations or genetic polymorphisms, i.e. variable nucleotide sequences in genetic material from animals, plants or micro-organisms. Genetic polymorphisms comprise polymorphisms selected from the group consisting of a single nucleotide polymorphism (SNP), a variable number tandem repeat polymorphism, an interspersed repetitive DNA, insertions, duplications, deletions, amplifications, rearrangements, a combination of SNP's, short tandem repeats, dinucleotide repeats, interspaced repetitive DNA and any combination of these. Variable nucleotide sequence may e.g. be distinguishable by nucleic acid amplification and observation of a difference in size or sequence of nucleotides due to the polymorphism.

The micro systems and methods according to the present invention may be used in the diagnosis of any state-of-the-art biological substance, such as any biological organism including i) a mammalian cell, including human cells and eukaryotic cells, or a part thereof, ii) a virus, including mammalian vira, human vira and eukaryotic vira, or a part thereof, and/or iii) a parasite, including mammalian parasites, human parasites and eukaryotic parasites, said cell, virus and/or parasite forming part of the human or animal body under normal physiological condition, or under conditions diagnosable as an illness, a disease, a syndrome, a deficiency or any other potentially treatable, characterisable or diagnosable condition. Furthermore, the micro systems and methods according to the present invention may be used in the diagnosis of any other biological substances not yet forming part of the state-of-the-art. Examples of cells, viruses and parasites are given herein below.

The method of diagnosis may also be directed to target substances such as e. g. microbial organisms such as yeasts and fungi, slime molds and micro-organisms in general and pathogenic micro-organisms in particular. Examples of micro-organisms are given herein below. Also in this case will the person skilled in the art know how to match these microbial target organisms with a reagent exhibiting specificity for said target organism.

The person skilled in the art will generally know how to use or formulate a reagent specific for any target substance of interest. The skilled person will also have at his disposal general and specialised medicine and biochemistry textbooks and reference collections.

Preferred reagents according to the invention include antigenic and/or immunogenic determinants including antibodies and monoclonal antibodies for the contacting of corresponding antigens and vice versa. This may be of prime interest when analysing an antibody response to a particular antigen or when screening a human being for a pathogen organism such as a potentially lethal virus or a pathogenic micro-organism.

The method of diagnosis according to the present invention may be used e. g. in a diagnosis of severe combined immune deficiency, DiGeorge syndrome, MHC class I deficiency, MHC class 11 deficiency, Wiskott-Aldrich syndrome, common variable immunodeficiency, X-linked agamma-globulinemia, X-linked hyper-IgM syndrome, selective IgA and/or IgG deficiency, phagocyte deficiencies, complement deficien cies, natural killer (NK) cell defect, X-linked lympho-proliferative syndrome, Ataxia telangiectasia, and various autoimmune lympho-proliferative diseases. The skilled person will know how to select reagents capable of diagnosing directly or indirectly each of the above-mentioned conditions.

It may also be possible to detect, according to another presently preferred method of the invention, particular cellular changes and/or an altered cellular differentiation.

As one example one can mention the altered number of CD4 cells during an infection of a human being with Human Immunodeficiency Virus (HIV). Many cellular and subcellular events may be monitored by examination of specific cellular determinants, or CD antigens, expressed by a variety of cells including cortical thymocytes, Langerhans cells, dendritic cells, B cells and subsets thereof, including B cells in chronic lymphatic leukemia, T cells and activated T cells and precursors thereof, helper T cells and inflammatory T cells, cytotoxic T cells, thymocytes, monocytes, leukocytes, lymphocytes, macrophages, pluripotential hematopoietic cells, eosinophils, basophils, neutrophils, natural killer cells, platelets, brain and peripheral nerve cells, vascular smooth muscle cells, intestinal epithelium cells, smooth muscle cells, blood vesses, bone marrow stromal cells, myeloid cells, granulocytes, myelomonocytic cells, and follicular dendritic cells.

It may also be possible according to another presently preferred method of the invention to detect or diagnose the presence of undesirable and pathogenic micro-organisms such as e. g. micro-organisms belonging to arts and species such as Achromobacter xylosoxidans, Acinetobacter calcoaceticus, Actinomyces israelii, Aeromonas hydrophilia, Alcaligenes, Arizona hinshawii, Bacillus anthracis, Bacillus cereus, Bacteroides fragilis, Bacteroides melaninogenicus, Bordetella pertussis, Borrelia recurrentis, Brucella, Calymmatobacterium granulomatis, Campylobacter fetus ssp. Intestinalis, Campylobacter fetus ssp. Jejuni, Chlamydia, Chromobacte rium violaceum, Citrobacter, Clostridium botulinum, Clostridium perfringens, Clostridium difficile, Clostridium tetani, Corynebacterium diphteriae, Corynebacterium, Coxiella burnetti, Edwardsiella tarda, Eikenella corrodens, Enterobacter, Erysipelothrix rhusiopathiae, Escherichia coli, Flavobacterium meningosepticum, Francisella tularensis, Fusobacterium nucleatum, Gardnerella vaginalis, Haemophilus ducreyi, Haemophilus influenzae, Klebsiella pneumoniae, Legionella, Leptospira interro gans, Listeria monocytogenes, Moraxella, Mycobacterium bovis, Mycobacterium leprae, Mycobacterium tuberculosis, Mycoplasma, Neisseria gonorrhoeae, Neisseria meningitidis, Nocardia, Pasteurella multocida, Peptococcus magnus, Plesiomonas shigelloides, Proteus, Providencia, Pseudomonas aeruginosa, Pseudomonas mallei, Pseudomonas pseudomallei, Rickettsia, Salmonella, Serratia, Shigella dysenteriae, Spirillum minor, Staphylococcus aureus, Staphylococcus epidermidis, Staphylococcus saprophyticus, Streptobacillus moniliformis, Streptococcus, Streptococcus agalactiae, Streptococcus pneumoniae, Streptococcus pyogenes, Treponema carateum, Treponema pallidum, Treponema pertenue, Ureapiasma urealyticum, Vibrio cholerae, Vibrio parahaemolyticus, Yersinia enterocolitica, and Yersinia pestis.

Examples of viruses the presence of which in a sample is detectable according to the micro system and method of the invention is Adenoviruses, Arena viruses, Astroviruses, Bunyaviruses (Hantaan viruses), Cytomegalovirus, Calici viruses, Epstein-Barr virus, Filoviruses including Ebola virus, Hepatitis A virus, Hepatitis B virus, Hepatitis C virus, Herpesviruses, including Human Herpes Simplex viruses 1 and 2, Myxoviruses, Papillomaviruses, Papovaviruses, Parvoviruses, Picornaviruses, Togaviruses (Rubella virus), Paramyxoviruses and Orthomyxoviruses, Poliomyelitis Virus, Pox viruses, Reoviruses, Rhabdoviruses, Retroviruses, including Human Immunodeficiency Virus (HIV), Lymphadenopathy-Associated Virus (LAV), and Human T-lymphotropic Virus (HTLV), including any derivative thereof, including HTLV-I, HTLV-II, and HTLV-III.

By using the micro system and method according to the invention it is thus possible to detect any cell, virus or parasite being the cause of e. g. an infectious disease such as e. g. Acquired immune Deficiency Syndrome, Actinomycosis, Adenovirus infections, Anthrax, Ba cillary dysentery, Botulism, Brucellosis, Candidiasis, Cellulitis, Chancroid, Cholera, Coccidioidomycosis, Common cold, Conjunctivitis, Cystitis, Dermatophytosis, Diphtheria, Endocarditis, bacterial, Epiglottitis, Erysipelas, Erysipeloid, Gastroenteritis, Genital herpes, Glanders, Gonorrhea, Hepatitis, Histoplasmosis, Impetigo, Infectious mononucleosis, Influenza, Legionnaire's disease, Leprosy, Leptospirosis, Lyme disease, Melioidosis, Meningitis, Mumps, Nocardiosis, Nongonococcal urethritis, Pinta, Plague, Pneumococcal pneumonia, Poliomyelitis, Primary atypical pneumonia, Pseudomembranous enterocolitis, Puerperal sepsis, Rabies, Relapsing fever, Retrovirus infections, Rheumatic fever, Rocky Mountain spotted fever, Rubella, Rubeola, Scarlet fever, Staphylococcal scalded skin syndrome, Streptococcal pharyngitis, Syphilis, Tetanus, Toxic shock syndrome, Toxoplasmosis, Tuberculosis, Tularemia, Typhoid fever, Typhus, Vaginitis, Varicella, Warts, Whooping cough, Yaws, and Yellow fever.

The skilled person will also know how to test the efficacy of a vaccine by testing in a sample from an individual the antibody response of said individual following a vaccination. In this way, the efficacy of the following may readily be tested: Diphteria toxoid, Tetanus toxoid, Pertussis vaccine, Poliovirus vaccine, Rubeola vaccine, Mumps vaccine, Rubella vaccine, Influenza vaccine, Bacille CalmetteGu rin or BCG, Rabies vaccine, Typhoid vaccine, Cholera vaccine, and Yellow fever vaccine.

EXAMPLE

In order to verify the claimed functionality of a light driven micro pump, the following embodiment of the invention was constructed:

A 500mW 808nm laser diode from Sony (SLD322V) was arranged with current limiting circuit which in turn was connected to a computer control system, so that precise timing was made possible. The laser diode was collimated with a standard collimating lens with focal length f=8 mm and exit aperture=5 mm; thus the collimated beam (though not circular due to asymmetric properties of the laser diode) was confined to a diameter of 5 mm. Said collimated beam was shone onto a laser grade metal coated dielectric mirror (808nm - Ferroperm Optics, DK) at an angle of 45 degrees. The mirror was part of a galvanometer constructed of a 1.8 degree stepper motor with a 1:20 gearing; the mirror could as such be tilted in either direction with a resolution of 0.09 degrees. The collimated and deflected laser beam was then focussed with a lens with f=20 mm and diameter d=16 mm onto the micro fluidic chip.

The tilting mirror was situated at a distance of 50 mm from a polymer chip with the focussing lens positioned 20 mm from the chip. Via the described set-up, a length of 12 mm could be adequately addressed with a still focused and thus usable laser beam.

The computer control system was made to drive the laser in timely conjunction with the stepper motor, which in turn made it possible to fire the laser for a given period and at a given time and place along a fluidic channel.

The micro fluidic system was made up of an injection moulded polycarbonate chip supplied by Weidmann Plastics of Switzerland. The channel structure consisted of 20-200 $\mu$m wide recessed channels, 8 and 14 mm long and 50 $\mu$m deep - connected by 1000 $\mu$m circular reservoirs. The micro fluidic circuit was made by applying a lid (by means of glue) to the channel structure. This lid was made out of 2 mm thick glass onto which was applied a heat resistant layer ("Hot Spray" speciality spray by PlastiKote of US) able to withstand 815 degrees C. This layer was applied to only one side, and this side was facing the polymer channel structure - thus forming a fourth channel wall. Liquid access was made through the polymer chip, from the opposing side, by means of 400 $\mu$m holes - drilled through the polymer into the 1000 $\mu$m reservoirs.

The chip was primed with methanol by means of a syringe and was hereafter placed in conjunction with the before described laser system, so that the laser beam could be projected from beneath - through the glass lid and respectively be absorbed in the applied heat layer at a location in direct connection with a selected part of the fluidic channel. The micro fluidic channel was observed through a microscope mounted with a digital camera with a build-in IR-filter.

A test was conducted with methanol; the laser was adjusted to run at around 300mW optical output power as the full available 500mW seemed to be excessive - even at a minimum pulse width of one millisecond. The galvanometer was set to travel a distance of 2 mm during a timeframe of 1 second. The laser was set to fire a pulse of 2 milliseconds every 38 milliseconds which equals a duty cycle of 5% and in effect - every 100 $\mu$m along the 2 mm channel length of 100 $\mu$m width. Upon performing the test in accordance with the description a clear and consistent flow was detected and captured through the camera. Small amounts of trapped or dissolved air were released during firing of the laser producing permanent bubbles. These bubbles were clearly travelling through the channel along with the surrounding liquid - at a permanent flow rate, thus demonstrating that a continuous flow followed the direction of the laser beam as well as making abrupt stop, when the driving system was either returning to its starting point or temporarily halted. Further testing showed that reverse pumping worked just as well by reversing the cycle, as stated in the description of the invention.

From the captured motion pictures a pumping speed was calculated to be 1500 $\mu$m/s and thus the corresponding volumetric flow rate was calculated to be 7.5 nL/s

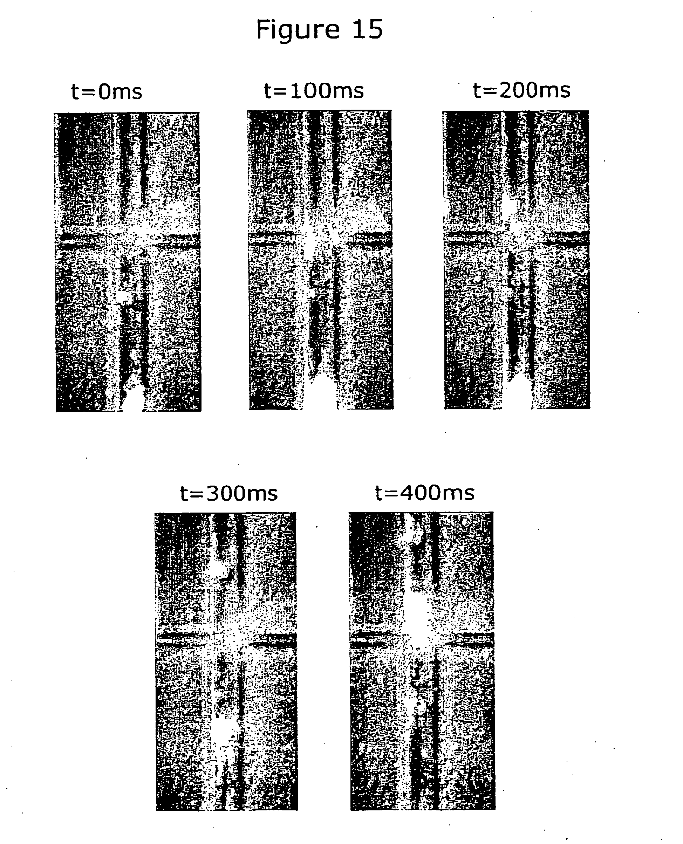

Fig. 15 is a collection of frames from the recorded motion picture. Five frames - each 100 ms apart - show an entrapped air bubble travelling 600 $\mu$m during 400 ms.

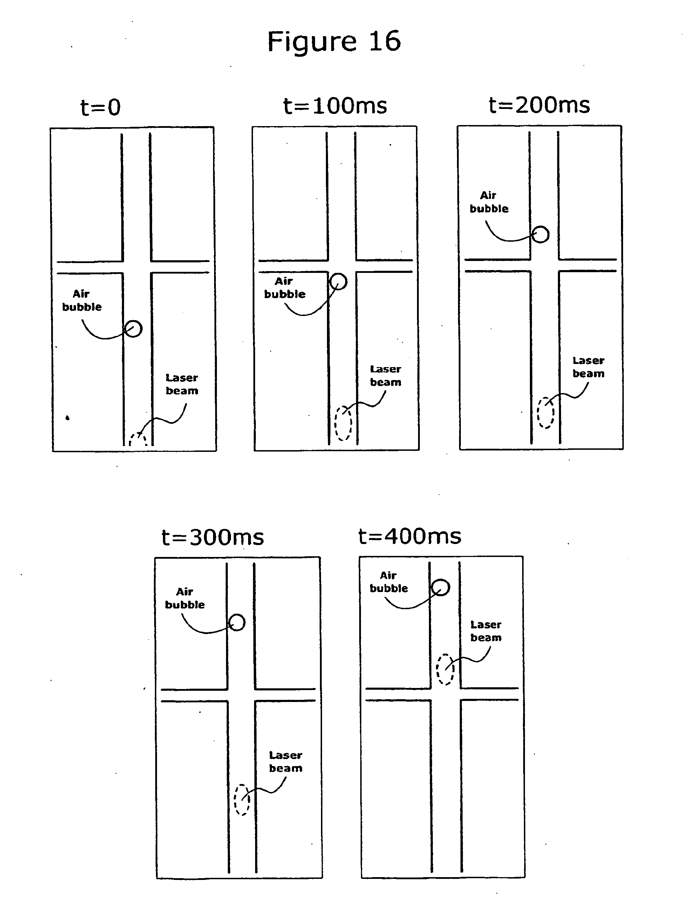

Fig. 16 is a graphical reproduction of the observed action as recorded via motion picture camera. Five frames, each 100ms apart, illustrate an entrapped air bubble travelling 600 $\mu$m during 400 ms.

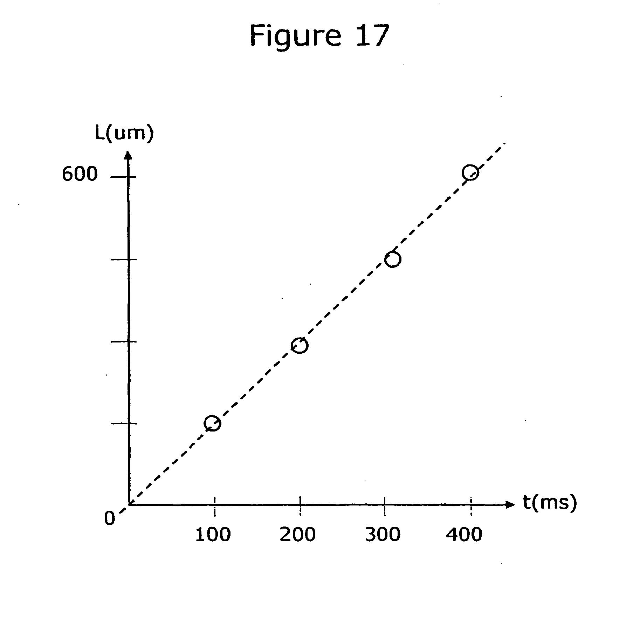

Fig. 17 is a plot representing travelling distance per unit time. A constant flow rate is illustrated by the fact that a straight line can be drawn through the plotted points.

REFERENCES

Manz et al: A. Manz, C. S. Effenhauser, N. Burggraf, D. J. Harrison, K. Seiler, and K. Fluri, "Electroosmotic pumping and electrophoretic separations for miniaturized chemical analysis systems," J. Micromech. Microeng., vol. 4, pp. 257-265, 1994.

Sambrook et al: Molecular cloning: a Laboratory Manual: 3nd edition, Volume 1 and 2, Sambrook et al., 2001, Cold Spring Harbor Laboratory Press

Jun et al: "Microscale pumping with traversing bubbles in microchannels", Thomas K. Jun and Chang-Jin Kim, ?US 2003 0021694
US 5,186,001
US 5,602,386
US 5,649,423
US 6,071,081
US 6,283,718
US 6,513,968

## Claims

1. A micro pumping system for generating a liquid flow in at least one micro channel (4) holding a liquid, the system comprising

   - a light source (1) adapted to emit a light beam (2) **characterized by** comprising
   - a substrate holding at least one micro channel (4) with at least a first section having a first surface part and at least a second section having a second surface part, and
   - moving means for inducing a relative movement between the light beam and the substrate,

   the means for moving being adapted to move between at least a first position in which the light beam will irradiate the first surface part and a second position in which the light beam will irradiate the second surface part whereby at least one vapour bubble (5,7,8) is formed acting on the liquid in the first and second section of the micro channel (4), respectively, in response to the irradiation of the respective surface parts of the micro channel (4).

2. A micro pumping system according to claim 1, wherein the light beam (2) is continuously irradiating the micro channel (4) when moving from the first position to the second position, creating at least one vapour bubble (5) travelling from the first section to the second section.

3. A micro pumping system according to claim 1, wherein at least a first vapour bubble (7) is formed in response to the light beam (2) irradiating the first surface part and at least a second vapour bubble (8) is formed in response to the light beam (2) irradiating the second surface part.

4. A micro pumping system according to claim 3, wherein the at least second vapour bubble (8) is formed before the at least first vapour bubble (7) is collapsed.

5. A micro pumping system according to any of the preceding claims, wherein at least one surface part of the micro channel (4) comprises a light absorbing material (3) for absorption of optical energy.

6. A micro pumping system according to any of the preceding claims, further comprising light beam control means for controlling parameters of the light beam (2).

7. A micro pumping system according to claim 6, wherein the light beam control means are adapted to control the parameters of the light beam to provide heating of a liquid in the micro channel (4).

8. A micro pumping system according to claim 7, wherein the light beam (2) has an energy density adequate to heat at least a part of the liquid to a temperature below the boiling point of said liquid.

9. A micro pumping system according to any of the claims 7 or 8, wherein the energy density for heating a substantial amount of liquid is lower than the energy density for inducing bubble formation.

10. A micro pumping system according to any of the claims 6-9, further comprising a thermopile element for detection of liquid temperature.

11. A micro pumping system according to any of the preceding claims, wherein the means for moving the light beam in relation to the substrate comprises means for moving the substrate.

12. A micro pumping system according to any of claims 1-11, wherein the means for moving the light beam in relation to the substrate comprises means for moving the light source.

13. A micro pumping system according to any of claims 1-12, wherein the means for moving the light beam in relation to the substrate comprises means for moving the light beam (6).

14. A micro pumping system according to any of the preceding claims, further comprising a focusing means for focusing the light beam at a selected location.

15. A micro pumping system according to claim 14, wherein the energy density and/or irradiation period of the light source is selected to form a vapour bubble (5,7,8) having dimensions corresponding to micro channel dimensions (4).

16. A micro pumping system according to claim 15, wherein two fluctuating vapour bubbles are formed in two adjacent sections of the micro channel, the fluctuation being controlled so as to sustain at least one vapour bubble restriction in the channel.

17. A micro pumping system according to any of the preceding claims, wherein the light source is a laser.

18. A micro pumping system according to any of the preceding claims, wherein the micro channel (4) comprises at least a first liquid (25) and a second liquid (26) to be mixed, and wherein at least a first vapour bubble (5) is formed in the at least first liquid (25) in response to the irradiation of a first surface part of at least a first section, the vapour bubble being adapted to extend into the second liquid (26), thereby increasing the boundary surface area (29) between the first and the second liquid.

**19.** A micro pumping system according to any of the claims 3-18 for pumping a liquid in a micro channel (4), wherein the at least second vapour bubble (8) is formed before the at least first vapour bubble (7) is collapsed so as to provide a pumping action/so as to move liquid in the direction from the first to the second section.

**20.** A micro pumping system according to any of claims 1-19, said micro pumping system furthermore comprising a system selected from the group consisting of a micro mixing system, a micro valve system, and a thermal reactor system.

**21.** A method of generating a liquid flow in at least one micro channel (4), the method comprising

- providing at least one substrate holding at least one micro channel (4),
- emitting at least one light beam (2) from at least one light source (1),
- inducing a relative movement between the at least one light beam (2) and the at least one substrate so that the at least first light beam (2) in a first position irradiates the first surface part and in a second position irradiates the second surface part,
- forming at least a first vapour bubble (5,7) in the at least first section in response to the irradiation of the first surface part,
- forming at least a second vapour bubble (5,8) in the at least second section in response to the irradiation of the second surface part,

the at least first (5,7) and second (5,8) vapour bubbles acting on the liquid in the first and second section of the micro channel (4), respectively, so as to generate a flow in the micro channel.

**22.** A method according to claim 21, comprising the step of continuously irradiating the micro channel (4) when moving from the first position to the second position, creating at least one vapour bubble (5) travelling from the first section to the second section.

**23.** A method according to claim 22, wherein at least a first vapour bubble (7) is formed in response to the light beam (2) irradiating the first surface part and at least a second vapour bubble (8) is formed in response to the light beam irradiating the second surface part.

**24.** A method according to claim 23, wherein the at least second vapour bubble (8) is formed before the at least first vapour bubble (7) is collapsed.

**25.** A method according to any of the claims 21-24, wherein the system is working bidirectionally.

**26.** A method according to any of claims 21-25, wherein at least one surface part of the micro channel (4) comprises a light absorbing material for absorption of optical energy.

**27.** A method according to any of claims 25-26, wherein the optical energy is absorbed directly in the liquid in the irradiated section.

**28.** A method according to any of the claims 21-27, wherein the vapour (5,7,8) bubble is formed by film boiling at least a part of the liquid in response to the light beam irradiation.

**29.** A method according to any of claims 21-28, further comprising focusing the light beam at a selected location by adjusting focusing means.

**30.** A method according to any of claims 21-29, wherein the light source is a laser

**31.** A method of pumping a liquid in a micro channel according to any of the claims 21-30, wherein the at least one micro channel with at least a first section having a first surface part and at least a second section having a second surface part, and wherein the at least second vapour bubble is formed before the at least first vapour bubble is collapsed so as to provide a pumping action.

**32.** A method according to claim 31, wherein the relative movement is obtained by moving the substrate, the light source, and/or the light beam.

**Patentansprüche**

**1.** Mikropumpsystem zum Erzeugen eines Flüssigkeitsstroms in mindestens einem Mikrokanal (4), der eine Flüssigkeit hält, das System umfassend

- eine Lichtquelle (1), dieangepasst ist, einen Lichtstrahl (2) auszusenden, **dadurch gekennzeichnet, dass** es umfasst
- ein Substrat, das mindestens einen Mikrokanal (4) mit mindestens einem ersten Abschnitt, der einen ersten Oberflächenteil aufweist, und mindestens einem zweiten Abschnitt, der einen zweiten Oberflächenteil aufweist, enthält, und
- Bewegungsmittel zum Induzieren einer relativen Bewegung zwischen dem Lichtstrahl und dem Substrat umfasst,

wobei die Mittel zum Bewegenangepasst sind, sich zwischen mindestens einer ersten Position, in der der Lichtstrahl den ersten Oberflächenteil bestrahlt, und einer zweiten Position, in der der Lichtstrahl den zweiten Oberflächenteil bestrahlt, zu bewegen, wobei mindestens eine Dampfblase (5, 7, 8) gebildet wird, die als Reaktion auf die Bestrahlung des jeweiligen Oberflächenteils des Mikrokanals (4) auf die Flüssigkeit im ersten bzw. zweiten Abschnitt des Mikrokanals (4) einwirkt.

2. Mikropumpsystem nach Anspruch 1, wobei der Lichtstrahl (2) den Mikrokanal (4) kontinuierlich bestrahlt, wenn er sich von der ersten Position in die zweite Position bewegt, wobei mindestens eine Dampfblase (5) gebildet wird, die vom ersten Abschnitt in den zweiten Abschnitt reist.

3. Mikropumpsystem nach Anspruch 1, wobei mindestens eine erste Dampfblase (7) als Reaktion auf Bestrahlen des ersten Oberflächenteils durch den Lichtstrahl (2) gebildet wird und mindestens eine zweite Dampfblase (8) als Reaktion auf Bestrahlen des zweiten Oberflächenteils durch den Lichtstrahl (2) gebildet wird.

4. Mikropumpsystem nach Anspruch 3, wobei die mindestens zweite Dampfblase (8) gebildet wird, bevor die mindestens erste Dampfblase (7) zusammengefallen ist.

5. Mikropumpsystem nach einem der vorhergehenden Ansprüche, wobei mindestens ein Oberflächenteil des Mikrokanals (4) ein Licht absorbierendes Material (3) zur Absorption optischer Energie umfasst.

6. Mikropumpsystem nach einem der vorhergehenden Ansprüche, weiterhin umfassend Lichtstrahlsteuermittel zur Steuerung von Parametern des Lichtstrahls (2).

7. Mikropumpsystem nach Anspruch 6, wobei die Lichtstrahlsteuermittel angepasst sind, die Parameter des Lichtstrahls zu steuern, um Erwärmen einer Flüssigkeit im Mikrokanal (4) bereitzustellen.

8. Mikropumpsystem nach Anspruch 7, wobei der Lichtstrahl (2) eine Energiedichte aufweist, die ausreicht, mindestens eines Teils der Flüssigkeit auf eine Temperatur unterhalb des Siedepunkts der Flüssigkeit zu erwärmen.

9. Mikropumpsystem nach einem der Ansprüche 7 oder 8, wobei die Energiedichte zum Erwärmen einer wesentlichen Menge Flüssigkeit niedriger ist als die Energiedichte zum Induzieren der Blasenbildung.

10. Mikropumpsystem nach einem der Ansprüche 6-9, weiterhin umfassend ein Thermosäulenelement zum Erfassen von Flüssigkeitstemperatur.

11. Mikropumpsystem nach einem der vorhergehenden Ansprüche, wobei das Mittel zum Bewegen des Lichtstrahls im Verhältnis zum Substrat Mittel zum Bewegen des Substrats umfasst.

12. Mikropumpsystem nach einem der Ansprüche 1-11, wobei das Mittel zum Bewegen des Lichtstrahls im Verhältnis zum Substrat Mittel zum Bewegen der Lichtquelle umfasst.

13. Mikropumpsystem nach einem der Ansprüche 1-12, wobei das Mittel zum Bewegen des Lichtstrahls im Verhältnis zum Substrat Mittel zum Bewegen des Lichtstrahls (6) umfasst.

14. Mikropumpsystem nach einem der vorhergehenden Ansprüche, weiterhin umfassend ein Fokussiermittel zum Fokussieren des Lichtstrahls auf einen ausgewählten Ort.

15. Mikropumpsystem nach Anspruch 14, wobei die Energiedichte und/oder Bestrahlungsdauer der Lichtquelle gewählt ist, sodass eine Dampfblase (5, 7, 8) mit Abmessungen, die den Abmessungen des Mikrokanals (4) entsprechen, gebildet wird.

16. Mikropumpsystem nach Anspruch 15, wobei zwei fluktuierende Dampfblasen in zwei benachbarten Abschnitten des Mikrokanals gebildet werden, wobei die Fluktuationn gesteuert ist, sodass mindestens eineDampfblase-Einschränkung im Kanal aufrechterhalten wird.

17. Mikropumpsystem nach einem der vorhergehenden Ansprüche, wobei die Lichtquelle ein Laser ist.

18. Mikropumpsystem nach einem der vorhergehenden Ansprüche, wobei der Mikrokanal (4) mindestens eine erste Flüssigkeit (25) und eine zweite Flüssigkeit (26), die zuvermischen sind, umfasst und wobei mindestens eine erste Dampfblase (5) in der mindestens ersten Flüssigkeit (25) als Reaktion auf die Bestrahlung eines ersten Oberflächenteils von mindestens einem ersten Abschnitt gebildet wird, wobei die Dampfblase angepasst ist, sodass sie sich in die zweite Flüssigkeit (26) erstreckt, wodurch sie den Grenzflächenbereich (29) zwischen der ersten und der zweiten Flüssigkeit vergrößert.

19. Mikropumpsystem nach einem der Ansprüche 3-18 zum Pumpen einer Flüssigkeit in einem Mikrokanal (4), wobei die mindestens zweite Dampfblase (8) gebildet wird, bevo die mindestens erste Dampfblase (7) zusammengefallen ist, um so eine Pumpwirkung bereitzustellen/um so Flüssigkeit in der Richtung vom ersten zum zweiten Abschnitt zu bewegen.

20. Mikropumpsystem nach einem der Ansprüche 1-19, wobei das Mikropumpsystem weiterhin ein System umfasst, das aus der Gruppe ausgewählt ist, die aus einem Mikromischsystem, einem Mikroventilsystem und einem Thermoreaktorsystem besteht.

21. Verfahren zum Erzeugen eines Flüssigkeitsstroms in mindestens einem Mikrokanal (4), das Verfahren umfassend

    - Bereitstellen mindestens eines Substrats, das mindestens einen Mikrokanal (4) enthält,
    - Aussenden mindestens eines Lichtstrahls (2) von mindestens einer Lichtquelle (1),
    - Induzieren einer relativen Bewegung zwischen dem mindestens einen Lichtstrahl (2) und dem mindestens einen Substrat, sodass der mindestens erste Lichtstrahl (2) in einer ersten Position den ersten Oberflächenteil bestrahlt und in einer zweiten Position den zweiten Oberflächenteil bestrahlt,
    - Bilden mindestens einer ersten Dampfblase (5, 7) im mindestens ersten Abschnitt als Reaktion auf die Bestrahlung des ersten Oberflächenteils,
    - Bilden mindestens einer zweiten Dampfblase (5, 8) im mindestens zweiten Abschnitt als Reaktion auf die Bestrahlung des zweiten Oberflächenteils,

    wobei die mindestens erste (5, 7) und zweite (5, 8) Dampfblase auf die Flüssigkeit im ersten bzw. zweiten Abschnitt des Mikrokanals (4) einwirken, um im Mikrokanal einen Strom zu erzeugen.

22. Verfahren nach Anspruch 21, umfassend den Schritt der kontinuierlichen Bestrahlung des Mikrokanals (4), wenn von der ersten Position in die zweite Position bewegt wird,
    wobei mindestens eine Dampfblase (5) gebildet wird, die vom ersten Abschnitt in den zweiten Abschnitt reist.

23. Verfahren nach Anspruch 22, wobei mindestens eine erste Dampfblase (7) als Reaktion auf Bestrahlen des ersten Oberflächenteils durch den Lichtstrahl (2) gebildet wird und mindestens eine zweite Dampfblase (8) als Reaktion auf Bestrahlen des zweiten Oberflächenteils durch den Lichtstrahl gebildet wird.

24. Verfahren nach Anspruch 23, wobei die mindestens zweite Dampfblase (8) gebildet wird, bevor die mindestens erste Dampfblase (7) zusammengefallen ist.

25. Verfahren nach einem der Ansprüche 21-24, wobei das System bidirektional arbeitet.

26. Verfahren nach einem der Ansprüche 21-25, wobei mindestens ein Oberflächenteil des Mikrokanals (4) ein Licht absorbierendes Material zur Absorption optischer Energie umfasst.

27. Verfahren nach einem der Ansprüche 25-26, wobei die optische Energie direkt in der Flüssigkeit im bestrahlten Abschnitt absorbiert wird.

28. Verfahren nach einem der Ansprüche 21-27, wobei die Dampfblase (5, 7, 8) durch Filmsieden mindestens eines Teils der Flüssigkeit als Reaktion auf die Bestrahlung mit dem Lichtstrahl gebildet wird.

29. Verfahren nach einem der Ansprüche 21-28, weiterhin umfassend Fokussieren des Lichtstrahls auf einen ausgewählten Ort durch Einstellen von Fokussierrnitteln.

30. Verfahren nach einem der Ansprüche 21-29, wobei die Lichtquelle ein Laser ist.

31. Verfahren zum Pumpen einer Flüssigkeit in einem Mikrokanal nach einem der Ansprüche 21-30, wobei der mindestens eine Mikrokanal mit mindestens einem ersten Abschnitt, der einen ersten Oberflächenteil aufweist, und mindestens einem zweiten Abschnitt, der einen zweiten Oberflächenteil aufweist, und wobei die mindestens zweite Dampfblase gebildet wird, bevor die mindestens erste Dampfblase zusammengefallen ist, um so eine Pumpwirkung bereitzustellen.

32. Verfahren nach Anspruch 31, wobei die relative Bewegung durch Bewegen des Substrats, der Lichtquelle und/oder des Lichtstrahls erhalten wird.

**Revendications**

1. Microsystème de pompage pour générer un écoulement de liquide dans au moins un microcanal contenant un liquide, le système comprenant

    - une source lumineuse (1) adaptée pour émettre un faisceau lumineux (2), **caractérisé par** le fait de comprendre
    - un substrat contenant au moins un microcanal (4) avec au moins une première section ayant une première partie de surface et au moins une seconde section ayant une seconde partie de surface, et
    - un moyen de déplacement pour induire un mouvement relatif entre le faisceau lumineux et le substrat,

    le moyen de déplacement étant adapté pour bouger entre au moins une première position dans laquelle le faisceau lumineux irradie la première partie de surface et une seconde position dans laquelle le faisceau lumineux irradie la seconde partie de surface, moyennant quoi au moins une bulle de vapeur (5,7,8) est formée agissant sur le liquide dans la première et la seconde section du microcanal (4), respectivement, en réponse à l'irradiation des parties de surface respectives du microcanal (4).

2. Microsystème de pompage selon la revendication 1, dans lequel le faisceau lumineux (2) irradie de façon continue le microcanal (4) lors du déplacement de la première position à la seconde position, créant au moins une bulle de vapeur (5) avançant de la première section à la seconde section.

3. Microsystème de pompage selon la revendication 1, dans lequel au moins une première bulle de vapeur (7) est formée en réponse au faisceau lumineux (2) irradiant la première partie de surface et au moins une seconde bulle de vapeur (8) est formée en réponse au faisceau lumineux (2) irradiant la seconde partie de surface.

4. Microsystème de pompage selon la revendication 3, dans lequel l'au moins seconde bulle de vapeur (8) est formée avant que l'au moins première bulle de vapeur (7) se soit effondrée.

5. Microsystème de pompage selon l'une quelconque des revendications précédentes, dans lequel au moins une partie de surface du microcanal (4) comprend un matériau absorbant la lumière (3) pour l'absorption de l'énergie optique.

6. Microsystème de pompage selon l'une quelconque des revendications précédentes, comprenant en outre des moyens de commande de faisceau lumineux pour commander les paramètres du faisceau lumineux (2).

7. Microsystème de pompage selon la revendication 6, dans lequel les moyens de commande de faisceau lumineux sont adaptés pour commander les paramètres du faisceau lumineux pour fournir un chauffage d'un liquide dans le microcanal (4).

8. Microsystème de pompage selon la revendication 7, dans lequel le faisceau lumineux (2) a une densité d'énergie adéquate pour chauffer au moins une partie du liquide à une température en dessous du point d'ébullition dudit liquide.

9. Microsystème de pompage selon l'une quelconque des revendications 7 ou 8, dans lequel la densité d'énergie pour chauffer une quantité substantielle de liquide est inférieure à la densité d'énergie pour induire la formation de bulles.

10. Microsystème de pompage selon l'une quelconque des revendications 6 à 9, comprenant en outre un élément de thermopile pour la détection de la température du liquide.

11. Microsystème de pompage selon l'une quelconque des revendications précédentes, dans lequel le moyen pour déplacer le faisceau lumineux par rapport au substrat comprend un moyen pour déplacer le substrat.

12. Microsystème de pompage selon l'une quelconque des revendications 1 à 11, dans lequel le moyen pour déplacer le faisceau lumineux par rapport au substrat comprend un moyen pour déplacer la source lumineuse.

13. Microsystème de pompage selon l'une quelconque des revendications 1 à 12, dans lequel le moyen pour déplacer le faisceau lumineux par rapport au substrat comprend un moyen pour déplacer le faisceau lumineux (6).

14. Microsystème de pompage selon l'une quelconque des revendications précédentes, comprenant en outre un moyen de focalisation pour focaliser le faisceau lumineux au niveau de l'emplacement sélectionné.

15. Microsystème de pompage selon la revendication 14, dans lequel la densité d'énergie et/ou la durée d'irradiation de la source lumineuse sont sélectionnées pour former une bulle de vapeur (5,7,8) ayant des dimensions correspondant aux dimensions du microcanal (4).

16. Microsystème de pompage selon la revendication 15, dans lequel deux bulles de vapeur fluctuantes sont formées dans deux sections adjacentes du microcanal, la fluctuation étant contrôlée de façon à supporter au moins une restriction de bulle de vapeur dans le canal.

17. Microsystème de pompage selon l'une quelconque des revendications précédentes, dans lequel la source lumineuse est un laser.

18. Microsystème de pompage selon l'une quelconque des revendications précédentes, dans lequel le microcanal (4) comprend au moins un premier liquide (25) et un second liquide (26) devant être mélangés, et dans lequel au moins une première bulle de vapeur (5) est formée dans l'au moins premier liquide (25) en réponse à l'irradiation d'une première partie de surface d'au moins une première section, la bulle de vapeur étant adaptée pour s'étendre dans le second liquide (26), augmentant ainsi la surface limite (29) entre le premier et le second liquide.

19. Microsystème de pompage selon l'une quelconque des revendications 3 à 18 pour pomper un liquide dans un microcanal (4), dans lequel l'au moins seconde bulle de vapeur (8) est formée avant que l'au moins première bulle de vapeur (7) se soit effondrée de façon à fournir une action de pompage/de façon à déplacer le liquide dans la direction allant de la première à la seconde section.

20. Microsystème de pompage selon l'une quelconque des revendications 1 à 19, ledit microsystème de pompage comprenant en outre un système sélectionné dans le groupe constitué d'un microsystème de mélange, d'un système de microsoupape et d'un système de réacteur thermique.

21. Procédé de génération d'un écoulement de liquide dans au moins un microcanal (4), le procédé comprenant

    - la fourniture d'au moins un substrat contenant au moins un microcanal (4),
    - l'émission d'au moins un faisceau lumineux (2) à partir d'au moins une source lumineuse (1),
    - l'induction d'un mouvement relatif entre l'au moins un faisceau lumineux (2) et l'au moins un substrat de façon à ce que l'au moins premier faisceau lumineux (2) dans une première position irradie la première partie de surface et dans une seconde position irradie la seconde partie de surface,
    - la formation d'au moins une première bulle de vapeur (5,7) dans l'au moins première section en réponse à l'irradiation de la première partie de surface,
    - la formation d'au moins une seconde bulle de vapeur (5,8) dans l'au moins seconde section en réponse à l'irradiation de la seconde partie de surface,

    les au moins première (5,7) et seconde (5,8) bulles de vapeur agissant sur le liquide dans la première et seconde section du microcanal (4), respectivement, de façon à générer un écoulement dans le microcanal.

22. Procédé selon la revendication 21, comprenant l'étape consistant à irradier de façon continue le microcanal (4) lors du déplacement de la première position à la seconde position, créant au moins une bulle de vapeur (5) avançant de la première section à la seconde section.

23. Procédé selon la revendication 22, dans lequel au moins une première bulle de vapeur (7) est formée en réponse au faisceau lumineux (2) irradiant la première partie de surface et au moins une seconde bulle de vapeur (8) est formée en réponse au faisceau lumineux irradiant la seconde partie de surface.

24. Procédé selon la revendication 23, dans lequel l'au moins seconde bulle de vapeur (8) est formée avant que l'au moins première bulle de vapeur (7) se soit effondrée.

25. Procédé selon l'une quelconque des revendications 21 à 24, dans lequel le système fonctionne de manière bidirectionnelle.

26. Procédé selon l'une quelconque des revendications 21 à 25, dans lequel au moins une partie de surface du microcanal (4) comprend un matériau absorbant la lumière pour l'absorption de l'énergie optique.

27. Procédé selon l'une quelconque des revendications 25 et 26, dans lequel l'énergie optique est absorbée directement dans le liquide dans la section irradiée.

28. Procédé selon l'une quelconque des revendications 21 à 27, dans lequel la bulle de vapeur (5,7,8) est formée par caléfaction d'au moins une partie du liquide en réponse à l'irradiation du faisceau lumineux.

29. Procédé selon l'une quelconque des revendications 21 à 28, comprenant en outre la focalisation du faisceau lumineux au niveau d'un emplacement sélectionné par un moyen de focalisation.

30. Procédé selon l'une quelconque des revendications 21 à 29, dans lequel la source lumineuse est un laser.

31. Procédé de pompage d'un liquide dans un microcanal selon l'une quelconque des revendications 21 à 30, dans lequel l'au moins un microcanal a au moins une première section ayant une première partie de surface et au moins une seconde section ayant une seconde partie de surface, et dans lequel l'au moins seconde bulle de vapeur est formée avant que l'au moins première bulle de vapeur se soit effondrée de façon à fournir une action de pompage.

32. Procédé selon la revendication 31, dans lequel le mouvement relatif est obtenu en déplaçant le substrat, la source lumineuse et/ou le faisceau lumineux.

# FIGURE 1

# FIGURE 2

t=t1

t=t2

t=t3

# FIGURE 3

# FIGURE 4

# FIGURE 5

# FIGURE 6a

# FIGURE 6b

# FIGURE 7

# FIGURE 8

# FIGURE 9

# FIGURE 10

**Fig.10a (t=t₁)**

**Fig.10b (t=t₂)**

## FIGURE 11a

## FIGURE 11b

# FIGURE 12a

# FIGURE 12b

# FIGURE 13

# FIGURE 14a

# FIGURE 14b

# Figure 15

t=0ms

t=100ms

t=200ms

t=300ms

t=400ms

# Figure 16

# Figure 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030021694 A, Yevin
- US 5602386 A
- US 5186001 A
- US 5649423 A
- US 6071081 A
- US 6283718 B
- US 6513968 B

**Non-patent literature cited in the description**

- **A. MANZ ; C. S. EFFENHAUSER ; N. BURGGRAF ; D. J. HARRISON ; K. SEILER ; K. FLURI.** Electroosmotic pumping and electrophoretic separations for miniaturized chemical analysis systems. *J. Micromech. Microeng.,* 1994, vol. 4, 257-265
- **SAMBROOK et al.** Molecular cloning: a Laboratory Manual. Cold Spring Harbor Laboratory Press, 2001, vol. 1, 2